# EUROPÄISCHE PATENTSCHRIFT

(11) **EP 4 428 829 B1**
(45) Veröffentlichungstag und Bekanntmachung des Hinweises auf die Patenterteilung: **02.12.2026**
(21) Anmeldenummer: 24160161.6
(22) Anmeldetag: 28.02.2024
(51) Int. Cl.: G06V 10/25, G06V 40/16

(54) **VERFAHREN UND VORRICHTUNG ZUM BESTIMMEN EINES BILDDATENSATZES FÜR EIN BIOMETRISCHES PASSBILD, VERFAHREN ZUM PERSONALISIEREN EINES SICHERHEITSDOKUMENTS UND COMPUTERPROGRAMMPRODUKT**
METHOD AND DEVICE FOR DETERMINING AN IMAGE DATA SET FOR A BIOMETRIC PASSIMAGE, METHOD FOR PERSONALIZING A SECURITY DOCUMENT AND COMPUTER PROGRAM PRODUCT
PROCÉDÉ ET DISPOSITIF DE DÉTERMINATION D'UN ENSEMBLE DE DONNÉES D'IMAGE POUR UNE IMAGE D'AJUSTEMENT BIOMÉTRIQUE, PROCÉDÉ DE PERSONNALISATION D'UN DOCUMENT DE SÉCURITÉ ET PRODUIT PROGRAMME INFORMATIQUE

(30) Priorität: 06.03.2023 DE 102023105433
(43) Veröffentlichungstag der Anmeldung: 11.09.2024
(73) Patentinhaber: Bundesdruckerei GmbH, 10969 Berlin (DE)
(72) Erfinder: Peters, Florian, 10437 Berlin (DE); Sauer, Tatjana, 13189 Berlin (DE); Vitadello, Caterina, 85221 Dachau (DE); Schultheiß, Christoph, 85622 Feldkirchen (DE)
(74) Vertreter: Bittner, Thomas L.

(56) Entgegenhaltungen:
- CN-A- 110 047 053
- US-A1- 2016 203 356
- US-B2- 11 043 011
- BARRA PAOLA ET AL: "Web-Shaped Model for Head Pose Estimation: An Approach for Best Exemplar Selection", IEEE TRANSACTIONS ON IMAGE PROCESSING, IEEE, USA, vol. 29, 6 April 2020 (2020-04-06), pages 5457 - 5468, XP011783155, ISSN: 1057-7149, [retrieved on 20200410], DOI: 10.1109/TIP.2020.2984373

## Beschreibung

Die Erfindung betrifft ein Verfahren sowie eine Vorrichtung zum Bestimmen eines Bilddatensatzes für ein biometrisches Passbild, ein Verfahren zum Personalisieren eines Sicherheitsdokuments und ein Computerprogrammprodukt.

### Hintergrund

Es ist bekannt, Personen anhand von biometrischen Gesichtsmerkmalen zu identifizieren. Solche biometrischen Gesichtsmerkmale können in Verbindung mit Sicherheitsdokumenten wie beispielsweise Ausweisen oder Pässen aus biometrischen Passbildern auf dem Sicherheitsdokument abgeleitet werden. Mittels des biometrischen Passbildes ist das Sicherheitsdokument personalisiert und ermöglicht ein Identifizieren der Person, wahlweise in Verbindung mit weiteren Sicherheitselementen des Sicherheitsdokuments. Auch im Zusammenhang mit anderen Anwendungen können biometrischen Passbildern entsprechende Bilder von Nutzern zur Identifizierung zum Einsatz kommen, beispielsweise bei der Eröffnung von Bankkonten, von Nutzerkonten für Internetanwendungen oder für die Zugangskontrolle zu physischen oder virtuellen Einrichtungen sowie Dienstleistungen.

Zum Bestimmen von Bilddatensätzen, die ein digitales biometrisches Passbild einer Person repräsentieren, werden üblicherweise Einzelbildaufnahmen mittels einer Kameraeinrichtung für die Person erfasst. Wird nach einer erfolgten Bildaufnahme festgestellt, dass ein oder mehrere Prüfkriterien für die Eignung als biometrisches Passbild nicht erfüllt sind, können ein oder mehrere weitere Einzelbildaufnahmen folgen. Alternativ können Einzelbilder aus einer Videobildaufnahme extrahiert werden. Ein solches Vorgehen ist beispielsweise in dem Dokument DE 10 2013 203 433 A1 beschrieben.

Für die Verwendbarkeit als biometrisches Passbild muss die Pose einer Person sehr genau mit entsprechenden Vorgaben übereinstimmen. Insbesondere bestimmt der ICAO-Standard für Passbilder eine vorgegebene Pose über die Winkel in drei Achsen des Kopfes, wobei die Pose im Rahmen festgelegter Toleranzen liegen muss, die typischerweise bei 5° liegen.

Eine Kontrolle einer Pose ist möglich, indem die Symmetrie eines gegebenen Bildes mittels Symmetrieberechnung geprüft wird. Eine solche Prüfung ist jedoch insbesondere bei Bildern von Personen mit einem stark asymmetrischen Gesicht ungenau.

In dem Dokument US 2016 / 0 203 356 A1 wird eine Methode zur Aufnahme und Verarbeitung eines Fotos für ein persönliches Identifikationsdokument wie einen Reisepass offenbart. Ein digitales Bildaufnahmesystem erfasst das Gesichtsbild, wobei Gesichtsbilderkennungstechniken zur automatischen Erkennung eines Gesichts und von Gesichtspunkten verwendet werden. Die Konformität des Gesichtsbildes wird überprüft und bei Konformität wird das Foto erstellt.

In dem Dokument US 11,043,011 B2 wird ein Bildverarbeitungsverfahren offenbart. Dabei werde grundlegenden Merkmalspunkte eines Quellobjekts in einem Quellbild und eines Basisobjekts in einem Basisbild erkannt. Außerdem werden Hilfsmerkmalspunkten, basierend auf der Verteilung der grundlegenden Merkmalspunkte in jedem der Bilder bestimmt. Des Weiteren werden Merkmalspunkten desselben Typs in jedem der Bilder, sowie durchschnittliche Merkmalspunkten basierend auf den Positionen der Merkmalspunkte desselben Typs bestimmt. Anhand der durchschnittlichen Merkmalspunkte werde das Quellobjekt und das Basisobjekt verformt und das verformte Quellobjekt und das verformte Basisobjekt werden verschmolzen.

In dem Dokument CN 110 047 053 wird die Erstellung von Porträtbildern offenbart, bei der Gesichtsverschönerung in Echtzeit auf Videorahmen ausgeführt werden. Ein Zielvideorahmen wird aus den gesichtsverschönerten Videorahmen ausgewählt, um ein Zielporträtbild zu erhalten. Der Hintergrund des Zielporträtbilds wird ersetzt und das Zielporträtbild wird angepasst, um ein Zielergebnisbild zu erzeugen.

The article "Web-Shaped Model for Head Pose Estimation: An Approach for Best Exemplar Selection" by Paola Barra et al. (IEEE TRANSACTIONS ON IMAGE PROCESSING, VOL. 29, 2020) refers to a method for head pose estimation.

### Zusammenfassung

Aufgabe der Erfindung ist es, verbesserte Technologien zum Bestimmen eines Bilddatensatzes für ein biometrisches Passbild anzugeben, insbesondere für das effiziente Bestimmen eines Gesichtsbildes mit einer idealen nutzerspezifischen Pose.

Zur Lösung der Aufgabe ist ein Verfahren sowie zum Bestimmen eines Bilddatensatzes für ein biometrisches Passbild nach dem unabhängigen Anspruch 1 bereitgestellt. Weiterhin sind ein Verfahren zum Personalisieren eines Sicherheitsdokuments, eine Vorrichtung zum Bestimmen eines Bilddatensatzes für ein biometrisches Passbild sowie ein Computerprogrammprodukt nach weiteren unabhängigen Ansprüchen geschaffen.

Gemäß einem Aspekt ist ein Verfahren zum Bestimmen eines Bilddatensatzes für ein biometrisches Passbild bereitgestellt. Das Verfahren umfasst das Bestimmen einer Folge von Gesichtsbildern für eine Person aus einer Videobildaufnahme. Für jedes der Gesichtsbilder wird eine Mehrzahl von vorgegebenen biometrischen Landmarks in dem Gesichtsbild bestimmt, das Gesichtsbild in mehrere Sektoren aufgeteilt, wobei das Aufteilen mittels wenigstens einer das Gesichtsbild unterteilenden Begrenzungslinie erfolgt, welche durch eine vorgegebene Auswahl der biometrischen Landmarks verläuft, eine Landmark-Dichte für jeden der Sektoren bestimmt, wobei die Landmark-Dichte jeweils dem Verhältnis aus der Anzahl der in dem betreffenden Sektor liegenden Landmarks zu der Fläche des Sektors entspricht, ein Dichteverhältnis zwischen Landmark-Dichten bestimmt, die für innerhalb des Gesichtsbildes gegenüberliegende Sektoren bestimmt wurden, und ein Koordinatenpunkt für das Gesichtsbild bestimmt, wobei ein Koordinatenwert des Koordinatenpunkts dem Dichteverhältnis entspricht. Es wird ein aktuellen Gesichtsbilds aus der Folge von Gesichtsbildern ausgewählt und für das aktuelle Gesichtsbild wird eine Posenprüfung ausgeführt. Die Posenprüfung umfasst das Bestimmen, ob der Koordinatenpunkt in einem Toleranzbereich um einen Referenzpunkt liegt, wobei der Referenzpunkt einen für die Person individuellen Punkt darstellt, der einer gewünschten Kopfausrichtung für ein biometrisches Passbild entspricht. Falls der Koordinatenpunkt nicht in dem Toleranzbereich liegt, erfolgt die Auswahl eines nächsten aktuellen Gesichtsbilds für die Person aus der Videobildaufnahme und das Ausführen der Posenprüfung für das nächste aktuelle Gesichtsbild, und falls der Koordinatenpunkt in dem Toleranzbereich liegt, erfolgt das Bestimmen des aktuellen Gesichtsbildes als ausgewähltes Gesichtsbild. Der Bilddatensatz wird dann unter Verwendung des ausgewählten Gesichtsbildes erzeugt.

Weiterhin ist ein Verfahren zum Personalisieren eines Sicherheitsdokuments geschaffen, mit den Schritten Bestimmen eines Bilddatensatzes für ein biometrisches Passbild gemäß dem Verfahren zum Bestimmen eines Bilddatensatzes für ein biometrisches Passbild, Bereitstellen des Bilddatensatzes in einer Personalisierungseinrichtung, Bereitstellen eines Sicherheitsdokuments und Personalisieren des Sicherheitsdokuments, wobei hierbei der Bilddatensatz in der Personalisierungseinrichtung verarbeitet wird und eine Repräsentation des ausgewählten Gesichtsbildes auf dem Sicherheitsdokument aufgebracht wird.

Gemäß einem weiteren Aspekt ist eine Vorrichtung zum Bestimmen eines Bilddatensatzes für ein biometrisches Passbild geschaffen, mit einer Videobildaufnahmevorrichtung, welche eingerichtet ist, eine Folge von Gesichtsbildern für eine Person aufzunehmen, und einer Datenverarbeitungseinrichtung, welche eingerichtet ist, das Verfahren nach mindestens einem der Ansprüche 1 bis 11 auszuführen.

Zusätzlich ist ein Computerprogrammprodukt bereitgestellt, umfassend Befehle, die bei der Ausführung des Programms durch eine Datenverarbeitungsvorrichtung, insbesondere eine offenbarungsgemäße Vorrichtung zum Bestimmen eines Bilddatensatzes für ein biometrisches Passbild, diese veranlassen, die Verfahrensschritte des Verfahrens zum Bestimmen eines Bilddatensatzes für ein biometrisches Passbild auszuführen.

Für die offenbarungsgemäße Verarbeitung der Folge von Gesichtsbilder können die Gesichtsbilder insbesondere jeweils in Form von (elektronischen) Bilddaten vorliegen, die dann direkt der Verarbeitung durch eine Datenverarbeitungseinrichtung zugänglich sind.

Das Bestimmen und Verarbeiten sogenannter (biometrischer) Landmarks im Zusammenhang mit Gesichtsbildern ist als solches bekannt. Hierbei handelt es sich um markante und/oder für die Gesichtserkennung relevante Punkte des Gesichts, wie es in dem betreffenden Bild wiedergegeben ist. Für die Bestimmung von Landmarks in Gesichtsbildern sind verschiedene Algorithmen als solche bekannt und für das offenbarungsgemäße Bestimmen von Landmarks geeignet. Offenbarungsgemäß wird für jedes der Gesichtsbilder eine Mehrzahl von Landmarks bestimmt, wobei insbesondere eine Anzahl von mehr als 100 Landmarks bestimmt werden kann, bevorzugt mehr als 400 Landmarks, beispielsweise 468 Landmarks. Sofern offenbarungsgemäß eine Mehrzahl biometrischer Landmarks, bzw. eine Auswahl der biometrischen Landmarks, vorgegeben ist, ist hierunter eine Vorgabe zu verstehen, welche Punkte in einem Gesicht zu bestimmen sind, also beispielsweise Augenmitte, Nasespitze, linke Schläfe, Kinn usw. Das Bestimmen der betreffenden Landmarks in dem Gesichtsbild erfolgt hiervon separat.

Der Wert der Landmarks bzw. die Position der betreffenden Landmark in dem Gesichtsbild ist somit auch bei vorgegebenen Landmarks nicht vorgegeben, sondern wird offenbarungsgemäß in dem Gesichtsbild bestimmt. Die vorgegebene Auswahl der biometrischen Auswahl für das Aufteilen des Gesichtsbild kann erst im Laufe der Bestimmens des Bilddatensatzes vorgegeben werden, beispielsweise in Abhängigkeit von der Genauigkeit, mit der bestimmte der vorgegebenen biometrischen Landmarks in den Gesichtsbildern bestimmt werden konnten. Alternativ kann die Auswahl der biometrischen Landmarks für das Bestimmen des Bilddatensatzes fest vorgegeben sein.

Bei einer Kopfbewegung während einer Videoaufnahme eines Gesichts einer Person bewegen sich die Landmarks des Gesichts im Bildausschnitt. Gleichzeitig ändern sich aufgrund der durch die Videokamera vorgegebene Perspektive auch die Abstände zwischen Landmarks in dem aufgenommenen Bild des Gesichts. Eine Aufteilung eines Gesichtsbilds in Sektoren anhand vorgegebener Landmarks führt in der Folge dazu, dass sich bei einer Kopfbewegung die Fläche der Sektoren in einem aus der Videoaufnahme bestimmten Gesichtsbild (in der Bildebene) ändert. Zudem können Landmarks durch die Kameraperspektive bei einer Kopfbewegung in einen anderen Sektor wandern. Beispielsweise führt dann bei einer Aufteilung eines Gesichtsbildes entlang einer durch die Stirnmitte und die Kinnspitze verlaufenden Begrenzungslinie dazu, dass bei einer Links-Rechts-Drehung des Kopfes die Nasenspitze zwischen dem linken und dem rechten Sektor wandert. Insgesamt ergibt sich, dass eine Kopfbewegung zu einer Änderung der Landmark-Dichte in Sektoren führt. Offenbarungsgemäß wird dieser Umstand genutzt, um für das Bestimmen eines Bilddatensatzes für ein biometrisches Passbild über die Landmark-Dichte ein Gesichtsbild mit einer Kopfausrichtung auszuwählen, die einer gewünschten Kopfausrichtung möglichst nahekommt, welche über einen Referenzpunkt definiert ist.

Offenbarungsgemäß kann es also insbesondere ermöglicht sein, eine verbesserte Posenkontrolle (Kontrolle der Kopfausrichtung einer Person) beim Bestimmen eines Bilddatensatzes für ein biometrisches Passbild bereitzustellen, indem aus einer Videobildaufnahme der Person ein Einzelbild ausgewählt wird, in welchem die Kopfpose der Person einer Referenz, insbesondere einer gewünschten Pose, am nächsten kommt. Insbesondere kann eine Posenkontrolle bereitgestellt sein, die nicht auf einer einfachen Symmetriekontrolle in einem Bild basiert, bei der lediglich ein (möglichst) gleicher Abstand einzelner paarweise erwarteter Landmarks, beispielsweise der Augenmitten, zu einer betreffenden Symmetriereferenz (beispielsweise die Nasenspitze) geprüft wird.

Bei einer aus einer Videobildaufnahme bestimmten Folge von Gesichtsbildern kann es sich insbesondere um mehrere Einzel-Frames der Videobildaufnahme handeln. Bevorzugt werden kontinuierlich Gesichtsbilder aus der Videobildaufnahme bestimmt, und so die Folge von Gesichtsbildern fortlaufend bereitgestellt. Das Bestimmen einer Folge von Gesichtsbildern kann das Bestimmen einer ausreichenden Anzahl von Gesichtsbildern umfassen, um eine ausreichende Wahrscheinlichkeit für das Vorhandensein eines als biometrisches Passbild nutzbaren Gesichtsbilds sicherzustellen. Alternativ oder zusätzlich kann eine ausreichende Anzahl von Gesichtsbildern bestimmt werden, um einen geeigneten Referenzpunkt zu bestimmen, wie nachfolgend näher beschrieben. Beispielsweise können wenigstens 10 Gesichtsbilder bestimmt werden.

Das Dichteverhältnis gibt an, in welchem der gegenüberliegenden Sektoren eine höhere Landmark-Dichte vorliegt. Hierbei kann das Dichteverhältnis als Differenz zwischen den betreffenden Landmark-Dichten gebildet sein. In diesem Fall kann das Vorzeichen des Dichteverhältnisses anzeigen, in welchem der betreffenden Sektoren die höhere Landmark-Dichte vorliegt. Alternativ kann die Landmark-Dichte als Quotient zwischen den betreffenden Landmark-Dichten gebildet sein. Hierbei kann dann dadurch, ob das Dichteverhältnis größer oder kleiner als eins ist angezeigt sein, in welchem der betreffenden Sektoren die höhere Landmark-Dichte vorliegt.

Der Toleranzbereich kann ein statistisch relevantes Maß einer Abweichung von dem Referenzpunkt angeben. Beispielsweise kann der Toleranzbereich einen Zwei-Sigma-Bereich (Bereich, der durch die jeweilige doppelte Standardabweichung für die Werte des Referenzpunktes in den jeweiligen Dimensionen bestimmt ist) um den Referenzpunkt angeben, der sich anhand statistischer Werte der Bestimmung des Referenzpunktes für die Person ergibt.

Bei dem Verfahren kann das Aufteilen des Gesichtsbilder in vier Sektoren erfolgen, wobei die vier Sektoren in dem betreffenden Gesichtsbild oben links, oben rechts, unten links und unten rechts liegen. Hierbei umfasst das Bestimmen der Landmark-Dichte das Bestimmen einer Links-Landmark-Dichte, welche eine Landmark-Dichte eines Links-Sektors ist, der durch eine Zusammenfassung des oben links liegenden Sektors und des unten links liegenden Sektors gebildet ist, das Bestimmen einer Rechts-Landmark-Dichte, welche eine Landmark-Dichte eines Rechts-Sektors ist, der durch eine Zusammenfassung des oben rechts liegenden Sektors und des unten rechts liegenden Sektors gebildet ist, das Bestimmen einer Oben-Landmark-Dichte, welche eine Landmark-Dichte eines Oben-Sektors ist, der durch eine Zusammenfassung des oben links liegenden Sektors und des oben rechts liegenden Sektors gebildet ist, und das Bestimmen einer Unten-Landmark-Dichte, welche eine Landmark-Dichte eines Unten-Sektors ist, der durch eine Zusammenfassung des unten links liegenden Sektors und des unten rechts liegenden Sektors gebildet ist. Das Bestimmen des Dichteverhältnisses umfasst dann das Bestimmen eines Links-Rechts-Dichteverhältnisses, welches ein Verhältnis zwischen der Links-Landmark-Dichte und der Rechts-Landmark-Dichte ist, und das Bestimmen eines Oben-Unten-Dichteverhältnisses, welches ein Verhältnis zwischen der Oben-Landmark-Dichte und der Unten-Landmark-Dichte ist. In dieser Ausführung erfolgt das Bestimmen des Koordinatenpunktes in einem zweidimensionalen Koordinatensystem, wobei der Koordinatenwert des Koordinatenpunkts in der ersten Dimension des zweidimensionalen Koordinatensystems dem Links-Rechts-Dichteverhältnis entspricht und der Koordinatenwert des Koordinatenpunkts in der zweiten Dimension des zweidimensionalen Koordinatensystems dem Oben-Unten-Dichteverhältnis entspricht, und der der Toleranzbereich gibt einen zweidimensionalen Bereich um den Referenzpunkt in dem zweidimensionalen Koordinatensystem an.

In alternativen Ausführungen ist eine Aufteilung des Gesichtsbild in eine andere Zahl von Sektoren, insbesondere mehr als vier Sektoren, möglich. Hierbei erfolgt dann ein Zusammenfassen von Sektoren zu paarweise gegenüberliegenden Sektoren, über die eine jeweilige Rotation des Kopfes der Person senkrecht zu der das betreffende Sektorenpaar teilenden Symmetrielinie erfasst werden kann. In diesem Fall wird der Koordinatenpunkt auf analoge Weise in einem entsprechend (höher-)dimensionalen Koordinatensystem bestimmt und die Posenprüfung erfolgt ebenfalls in diesem Koordinatensystem.

Bei dem Aufteilen der Gesichtsbilder in vier oder mehr Sektoren kann das Aufteilen mittels einer ersten Begrenzungslinie und einer zweiten Begrenzungslinie erfolgen, wobei die erste Begrenzungslinie durch die Landmarks Stirnmitte und Kinnspitze verläuft. Die zweite Begrenzungslinie kann durch die Landmarks Oberkante linkes Ohr und Oberkante rechtes Ohr verlaufen. Alternativ kann die zweite Begrenzungslinie durch die Landmarks Oberkante linke Wange und Oberkante rechte Wange verlaufen. Als weitere Alternative kann die zweite Begrenzungslinie durch die Landmarks linke Schläfe und rechte Schläfe verlaufen.

Es kann vorgesehen sein, dass bei dem Aufteilen der Gesichtsbilder in vier oder mehr Sektoren das Aufteilen mittels einer ersten Begrenzungslinie und einer zweiten Begrenzungslinie erfolgt, wobei wenigstens eine der ersten Begrenzungslinie und der zweiten Begrenzungslinie durch wenigstens einen imaginären Punkt verläuft, der mittels einer Mittelung aus mehreren Landmarks bestimmt wurde. Beispielsweise kann ein imaginärer Punkt durch Mittelung aus drei Landmarks bestimmt werden. In einer beispielhaften Ausgestaltung verläuft die erste Begrenzungslinie durch einen imaginären Punkt, der aus der Landmark Stirnmitte sowie aus der jeweiligen links und rechts daneben nächstliegenden Landmark gemittelt wurden.

Das Bestimmen der Folge von Gesichtsbildern für die Person kann mittels Videobildaufnahme während einer Kopfbewegung der Person erfolgen. Beispielsweise kann eine Videobildaufnahme vorgesehen sein, während die Person ihren Kopf aus einer neutralen Stellung nach links, nach rechts, nach oben sowie nach unten dreht, insbesondere jeweils über die neutrale Stellung. Hierbei kann die neutrale Stellung eine Stellung sein, welche die Person als neutrale Kopfstellung wahrnimmt. Alternativ kann der Person eine Kopfstellung als neutrale Kopfstellung vorgegeben werden, beispielsweise mittels Anweisungen, die anlassbezogen ausgegeben werden oder in Form eine Anleitung vorliegen, oder durch eine Aufsichtsperson.

Das Verfahren kann das Erzeugen einer Ausgabe an die Person umfassen, wobei mit der Ausgabe eine Anweisung an die Person zum Ausführen der Kopfbewegung ausgegeben wird. Beispielsweise kann eine Anweisung an die Person erfolgen, ihren Kopf aus einer neutralen Stellung nach links, nach rechts, nach oben sowie nach unten zu drehen, insbesondere jeweils über die neutrale Stellung. Die Ausführungen oben zur neutralen Stellung können hierbei entsprechend gelten. Es kann eine Überprüfung vorgesehen sein, ob die Person der Anweisung Folge leistet, also ob die Kopfbewegung von der Person ausgeführt wird. Beispielsweise kann die Überprüfung mittels einer Bildanalyse der Videobildaufnahme erfolgen. Führt die Person die Kopfbewegung nicht anweisungsgemäß aus, kann eine weitere Ausgabe mit einer entsprechenden Anweisung vorgesehen sein. Zusätzlich oder als Alternative kann für den Fall des Nicht-Befolgens der Anweisung durch die Person vorgesehen sein, das Verfahren weiter auszuführen, das Verfahren neu zu starten, einzelne oder mehrere Verfahrensschritte zu wiederholen und/oder das Verfahren abzubrechen.

Alternativ zu dem Erzeugen einer Ausgabe mit Anweisung an die Person zum Ausführen der Kopfbewegung kann vorgesehen sein, über einen vorgegebenen Zeitraum zu prüfen, ob die Person eine gewünschte Kopfbewegung ausführt. Dies kann beispielsweise vorgesehen sein, wenn der Person vor oder während der Ausführung des Verfahrens auf andere Weise Anweisungen zum Ausführen einer entsprechenden Kopfbewegung gegeben werden, beispielsweise mittels einer Bedienungsanleitung in einem ausgehändigten Dokument oder über eine Informationstafel. Hierbei können, falls die Person die Kopfbewegung nicht innerhalb des vorgegebenen Zeitraums ausführt, die oben für den Fall des nicht-anweisungsgemäßen Ausführens der Kopfbewegung durch die Person beschriebenen Ausführungen entsprechend vorgesehen sein.

Der Referenzpunkt stellt einen für die Person individuellen Punkt dar, der einer gewünschten Kopfausrichtung für ein biometrisches Passbild entspricht. Die gewünschte Kopfausrichtung kann einer neutralen bzw. symmetrischen Kopfausrichtung zur Kamera, insbesondere einer Ausrichtung des Gesichts der Person direkt auf die Kamera zu, entsprechen. Insbesondere kann die gewünschte Kopfausrichtung der gemäß dem ICAO-Standard für Passbilder vorgegebenen Pose entsprechen, die über die Winkel in drei Achsen des Kopfes definiert ist (insbesondere gemäß ICAO Doc 9303 bzw. dem Dokument "TECHNICAL REPORT - Portrait Quality (Reference Facial Images for MRTD)" in der Version 1.0 oder einer aktuelleren Fassung). Somit kann insbesondere eine Pose vorgesehen sein, bei welcher ein Gier- und ein Nickwinkel des Kopfes weniger als ±5° beträgt und ein Rollwinkel weniger als ±8°, bevorzugt weniger als ±5° beträgt. Im Gegensatz zu einem allgemeinen Referenzpunkt, beispielsweise einem einen Mittelwert über eine Population darstellenden Referenzpunkt, ist somit ein Referenzpunkt bereitgestellt, der individuell für die Person, für die der Bilddatensatz für ein biometrisches Passbild bestimmt wird, eine gewünschte Kopfausrichtung angibt, insbesondere eine (annähernd) neutrale Kopfausrichtung zu einer Kamera, mit der die Videobildaufnahme ausgeführt wird.

Hierbei kann der Referenzpunkt aus der Folge von Gesichtsbildern für die Person bestimmt werden. Es kann somit vorgesehen sein, dass der Referenzpunkt als für die Person individueller Punkt (erst) während des offenbarungsgemäßen Verfahrens bestimmt wird, insbesondere als eine iterative Bestimmung des Referenzpunktes, bei der zunächst aus einem ersten Gesichtsbild der Folge von Gesichtsbildern im Rahmen dessen Verarbeitung ein vorläufiger Referenzpunkt bestimmt wird, der dann mit der Verarbeitung jedes weiteren Gesichtsbilds der Folge von Gesichtsbildern iterativ angepasst wird, um schließlich den Referenzpunkt zu erhalten. Insbesondere kann die iterative Anpassung anhand einer vorgegebenen Mindestanzahl von Gesichtsbildern und/oder anhand aller Gesichtsbilder der Folge von Gesichtsbildern erfolgen.

Gemäß einer bevorzugten Ausgestaltung umfasst das Verfahren, vor dem Ausführen einer Posenprüfung, das Bestimmen des Referenzpunktes. Hierbei umfasst das Bestimmen des Referenzpunktes das Bestimmen eines Abstands des Koordinatenpunkts zu einem Hilfspunkt, wobei der Hilfspunkt einen Mittelwert über eine Population für einen Punkt darstellt, der einer gewünschten Kopfausrichtung für ein biometrisches Passbild entspricht. In einer solchen Ausgestaltung erfolgt ein Zuordnen einer Wichtung zu dem Koordinatenpunkt, wobei die Wichtung einer dem bestimmten Koordinatenpunkt zugeordneten Masse entspricht und dem betreffenden Koordinatenpunkt eine umso höhere Masse zugeordnet wird, je geringer ein Abstand des Koordinatenpunkts zu dem Hilfspunkt ist. Der Koordinatenpunkt mit Wichtung wird zu einer Menge von gewichteten Koordinatenpunkten hinzugefügt und es wird ein Massenmittelpunkt der Menge von gewichteten Koordinatenpunkten bestimmt. Der Massenmittelpunkt wird dann als vorläufiger Referenzpunkt festgelegt. Es wird nachfolgend geprüft, ob ein Abbruchkriterium erfüllt ist. Falls das Abbruchkriterium nicht erfüllt ist, erfolgt eine Auswahl eines nächsten aktuellen Gesichtsbilds für die Person aus der Videobildaufnahme und Wiederholen der vorgenannten Schritte des Bestimmens des Referenzpunktes. Falls das Abbruchkriterium erfüllt ist, erfolgt das Bestimmen des vorläufigen Referenzpunkts als Referenzpunkt, die Auswahl eines nächsten aktuellen Gesichtsbilds für die Person aus der Videobildaufnahme und das Ausführen der Posenprüfung für das nächste aktuelle Gesichtsbild.

In einer optionalen Ausgestaltung kann anstatt des Festlegens Massenmittelpunktes als vorläufigen Referenzpunkt ein Bestimmen eines vorläufigen Referenzpunkts vorgesehen sein, umfassend das Prüfen, ob bereits ein vorläufiger Referenzpunkt vorliegt und, falls kein vorläufiger Referenzpunkt vorliegt, Bestimmen des Massenmittelpunkts als vorläufigen Referenzpunkt. und, falls bereits ein vorläufiger Referenzpunkt vorliegt, Bestimmen eines Mittelwerts zwischen dem bereits vorliegenden vorläufigen Referenzpunkt und dem Massenmittelpunkt und Bestimmen des Mittelwerts als vorläufigen Referenzpunkt.

Der Hilfspunkt stellt einen Mittelwert über eine Population für einen Punkt dar, der einer gewünschten Kopfausrichtung für ein biometrisches Passbild entspricht Die gewünschte Kopfausrichtung kann einer neutralen bzw. symmetrischen Kopfausrichtung zur Kamera, insbesondere einer Ausrichtung des Gesichts der Person direkt auf die Kamera zu, entsprechen. Insbesondere kann die gewünschte Kopfausrichtung der gemäß dem ICAO-Standard für Passbilder vorgegebenen Pose entsprechen, die über die Winkel in drei Achsen des Kopfes definiert ist (insbesondere gemäß ICAO Doc 9303 bzw. dem Dokument "TECHNICAL REPORT - Portrait Quality (Reference Facial Images for MRTD)" in der Version 1.0 oder einer aktuelleren Fassung). Somit kann insbesondere eine Pose vorgesehen sein, bei welcher ein Gier- und ein Nickwinkel des Kopfes weniger als ±5° beträgt und ein Rollwinkel weniger als ±8°, bevorzugt weniger als ±5° beträgt. In dieser Ausführung wird also zunächst der Hilfspunkt bereitgestellt, der einen Mittelwert für eine gewünschte Kopfausrichtung über eine Population angibt. Dieser Wert wird über eine Wichtung der für die Gesichtsbilder bestimmten Koordinatenpunkte quasi als "Idealwert" vorgegeben, wobei jedoch eine individuelle gewünschte Kopfausrichtung oder Nullpose bestimmt wird. Auf diese Weise kann die Genauigkeit des Verfahrens erhöht sein, da zwar eine allgemeine Nullpose (der Population) berücksichtigt wird, durch die Berücksichtigung einer individuellen Nullpose anhand des individuellen Referenzpunktes jedoch individuelle Abweichungen in der Gesichtsgeometrie der Person berücksichtigt werden können, für die der Bilddatensatz bestimmt wird. Auf diese Weise kann eine Genauigkeit insbesondere für Personen erhöht sein, die einen von einer Symmetrie stärker abweichenden Gesichtsaufbau aufweisen, als der Bevölkerungsdurchschnitt.

Der Hilfspunkt kann beispielsweise bestimmt werden, indem Bilder von Personen herangezogen werden, die eine für eine relevante Gesamtpopulation repräsentative Population darstellen, wobei die Personen in den Bildern jeweils eine gewünschte (neutrale) Kopfausrichtung einnehmen. Für jedes der Bilder kann dann ein Referenzpunkt in Übereinstimmung mit den Erläuterungen zu dem offenbarungsgemäßen Verfahren erfolgen. Hierzu kann gegebenenfalls ein vorläufiger, zum Beispiel manuell bestimmter, Hilfspunkt herangezogen werden. Der Hilfspunkt kann dann als ein Punkt bestimmt werden, der einem Mittelwert der (individuellen) Referenzpunkte über die Population entspricht und somit (nahezu) einer Gesichtssymmetrie entspricht.

Gemäß den vorangehenden Ausführungen kann vorgesehen sein, iterativ weitere Koordinatenpunkte für weitere Gesichtsbilder der Folge von Gesichtsbildern zu bestimmen, und den Referenzpunkt unter Berücksichtigung der neu bestimmten Koordinatenpunkte iterativ zu berechnen. Alternativ zu einer Berücksichtigung einer festen Anzahl von Gesichtsbildern kann bei dieser oder einer anderen iterativen Bestimmung des Referenzpunktes vorgesehen sein, die iterative Bestimmung zu beenden und den so bestimmten Referenzpunkt für das weitere Verfahren zu verwenden, wenn (als Erfüllung des Abbruchkriteriums) die Position des Referenzpunktes konvergiert, sich also bei der Berücksichtigung weiterer Gesichtsbilder der Folge von Gesichtsbildern nicht mehr oder nur in geringem Maße ändert oder um einen festen oder annähernd festen Punkt herum bewegt.

Es können ein Toleranzbereich sowie mehrere Hilfssektoren um den Hilfspunkt bereitgestellt werden, wobei das Prüfen, ob ein Abbruchkriterium erfüllt ist, dann das Bestimmen umfasst, ob der Koordinatenpunkt innerhalb des Toleranzbereichs liegt. Falls die Prüfung ergibt, dass der Koordinatenpunkt innerhalb des Toleranzbereichs liegt, wird bestimmt, dass das Abbruchkriterium nicht erfüllt ist. Falls der Koordinatenpunkt nicht innerhalb des Toleranzbereichs liegt, wird für jeden der Hilfssektoren eine Anzahl von Koordinatenpunkten der Menge von gewichteten Koordinatenpunkten bestimmt, die in dem Hilfssektor und außerhalb des Toleranzbereichs liegt, und geprüft, ob die Anzahl geringer ist als eine Mindestanzahl für den betreffenden Hilfssektor. Falls für wenigstens einen der Hilfssektoren die Anzahl geringer ist als die Mindestanzahl, wird bestimmt, dass das Abbruchkriterium nicht erfüllt ist. Falls für keinen der Hilfssektoren die Anzahl geringer ist als die Mindestanzahl, wird bestimmt, dass das Abbruchkriterium erfüllt ist. Auf diese Weise kann sichergestellt werden, dass eine Kopfbewegung der Person für ein relevantes Bestimmen des individuellen Referenzpunkts geeignet, insbesondere ausreichend groß in alle relevanten Richtungen, ist. Beispielsweise kann eine zu geringe Anzahl von Koordinatenpunkten in einem oder mehreren Hilfssektoren darauf hinweisen, dass die Person nicht die gewünschte Pose einnimmt, also beispielsweise falsch zu einer Kamera ausgerichtet ist, mit der die Videobildaufnahme aufgenommen wird.

Der Toleranzbereich kann ein statistisch relevantes Maß einer Abweichung von dem Hilfspunkt angeben. Beispielsweise kann der Toleranzbereich einen Zwei-Sigma-Bereich (Bereich, der durch die jeweilige doppelte Standardabweichung für die Werte des Hilfspunktes in den jeweiligen Dimensionen bestimmt ist) um den Hilfspunkt angeben, der sich anhand der statistischen Bestimmung des Hilfspunktes für eine relevante Population ergibt.

Das Bereitstellen eines Toleranzbereiches und mehrerer Hilfssektoren um einen Hilfspunkt und das hierauf basierende Prüfen, ob ein Abbruchkriterium erfüllt ist, können auch für Ausführungen vorgesehen sein, in denen der Hilfspunkt nicht als Mittelwert über eine Population, sondern auf andere Weise bestimmt ist.

Es können wenigstens vier Hilfssektoren um den Hilfspunkt bereitgestellt werden, die jeweils einen Winkelbereich um den Hilfspunkt umfassen. Hierbei können die Winkelbereiche in dem zweidimensionalen Koordinatensystem so ausgewählt werden, dass anhand des Bestimmens der jeweiligen Anzahl von Koordinatenpunkten in den Hilfssektoren eine Aussage über die Eignung einer Kopfbewegung der Person ermöglicht ist. Beispielsweise können zwei links und rechts von dem Hilfspunkt liegende Hilfssektoren sich um jeweils 23° oberhalb und unterhalb einer Horizontalen erstrecken und zwei oberhalb und unterhalb des Hilfspunkts gelegene Hilfssektoren den verbleibenden Bereich um den Hilfspunkt abdecken.

Zusätzlich oder alternativ zu einem Bereitstellen von Hilfssektoren gemäß einem Winkelbereich um den Hilfspunkt können die Hilfssektoren einen Abstandsbereich von dem Hilfspunkt umfassen. Insbesondere können wenigstens vier Hilfssektoren um den Hilfspunkt bereitgestellt werden, die jeweils einen Winkelbereich um den Hilfspunkt sowie einen Abstandsbereich um den Hilfspunkt umfassen. Somit können die Hilfsbereiche Kreissegmente oder Kreisringsegmente, bzw. Ellipsensegmente oder Ellipsenringsegmente bilden.

Für das Bestimmen einer Anzahl von Koordinatenpunkten der Menge von gewichteten Koordinatenpunkten, die in einem gegebenen Hilfssektor liegt, kann für einen jeweiligen Koordinatenpunkt ein Vektor zwischen dem Hilfspunkt und dem Koordinatenpunkt bestimmt werden. Für den so bestimmten Vektor kann dann ein Winkel zu einem Hilfsvektor bestimmt werden, der von dem Hilfspunkt in positiver (alternativ: negativer) Richtung parallel zu einer festgelegten Koordinatenachse (beispielsweise X-Achse) des Koordinatensystems verläuft. Weiterhin kann für den so bestimmten Vektor ein Betrag (entsprechend einem Abstand des Koordinatenpunkts von dem Hilfspunkt) bestimmt werden. Ein Bestimmen, ob ein gegebener Koordinatenpunkt in einem gegebenen Hilfssektor liegt, kann dann mittels eines Vergleichs des Winkels zwischen für den Koordinatenpunkt bestimmtem Vektor und Hilfsvektor zu dem Winkelbereich des Hilfssektors und eines Vergleichs des Betrages für den Vektor zu dem Abstandsbereich des Hilfssektors.

Es kann eine Nutzerausgabe vorgesehen sein, bei welcher eine Ausgabe einer Rückmeldung zum Status des Bestimmens des Hilfspunkts erfolgt. Beispielsweise kann eine Anzeige (beispielsweise auf einer Ausgabevorrichtung) erfolgen, mittels welcher für jeden der Hilfssektoren angegeben wird, ob die Mindestanzahl von Koordinatenpunkten der Menge von gewichteten Koordinatenpunkten erreicht ist, die in dem Hilfssektor und außerhalb des Toleranzbereichs liegt. Hierbei kann eine binäre bzw. boolesche Ausgabe, ob die betreffende Mindestanzahl für den jeweiligen Hilfsbereich erreicht ist, vorgesehen sein, beispielsweise durch eine Anzeige von Schrift und/oder Einfärbung symbolischer Bereiche einer Anzeige. Alternativ oder zusätzlich kann für den betreffenden Hilfssektor ein Fortschritt angezeigt werden, beispielsweise in Form einer prozentualen Angabe der Koordinatenpunkte, die in dem Hilfssektor und außerhalb des Toleranzbereichs liegen, in Vergleich zu der Mindestanzahl und/oder in Form der Anzeige der Anzahl der Koordinatenpunkte, die in dem Hilfssektor und außerhalb des Toleranzbereichs liegen, und der Mindestanzahl und/oder in Form eines Fortschrittsbalkens.

Das Prüfen, ob ein Abbruchkriterium erfüllt ist, kann umfassen, falls eine Anzahl von Koordinatenpunkten in der Menge von gewichteten Koordinatenpunkten geringer ist als eine vorbestimmte Mindestanzahl, zu bestimmen, dass das Abbruchkriterium nicht erfüllt ist, und, falls die Anzahl von Koordinatenpunkten in der Menge von gewichteten Koordinatenpunkten wenigstens der vorbestimmten Mindestanzahl entspricht, zu bestimmen dass das Abbruchkriterium erfüllt ist. In diesem Fall kann unter der Annahme, dass eine Kopfbewegung der Person grundsätzlich für das offenbarungsgemäße Verfahren geeignet ist, ein einfaches Abbruchkriterium bereitgestellt sein, das auf einer erfahrungsgemäß ausreichenden Anzahl von Einzelbildern für das sinnvolle Bestimmen des Referenzpunktes basiert.

Nach dem Bestimmen des aktuellen Gesichtsbildes als ausgewähltes Gesichtsbild kann vorgesehen sein, zu bestimmen, ob das ausgewählte Gesichtsbild Prüfkriterien bezüglich der Eignung für ein biometrisches Passbild erfüllt. Falls das ausgewählte Gesichtsbild die Prüfkriterien nicht erfüllt, kann die Auswahl eines nächsten aktuellen Gesichtsbilds für die Person aus der Videobildaufnahme und Ausführen der Posenprüfung für das nächste aktuelle Gesichtsbild erfolgen. Falls das ausgewählte Gesichtsbild die Prüfkriterien erfüllt, kann der Schritt des Erzeugens des Bilddatensatzes ausgeführt werden. Es kann bestimmt werden, dass das ausgewählte Gesichtsbild die Prüfkriterien erfüllt, falls das Gesichtsbild mindestens eine notwendige Teilmenge einer Gesamtheit von Prüfkriterien erfüllt. Die notwendige Teilmenge der Prüfkriterien kann anwendungsabhängig festgelegt werden und bestimmt, dass nicht notwendigerweise alle jeweiligen Prüfkriterien von dem untersuchten Gesichtsbild erfüllt werden müssen, sondern nur eine Mindestanzahl. In alternativen Ausgestaltungen kann vorgesehen sein, dass das Gesichtsbild alle tatsächlich untersuchten Prüfkriterien erfüllen muss. Die notwendige Teilmenge von Prüfkriterien kann eine Mindestanzahl von Prüfkriterien angeben, die erfüllt sein müssen, wobei es hierbei nicht darauf ankommt, welche der Prüfkriterien erfüllt sind. Alternativ kann vorgesehen sein, dass die notwendige Teilmenge Prüfkriterien bestimmter Art festlegt, die notwendigerweise erfüllt sein müssen. Ist für die Prüfkriterien eine gewichtete Reihenfolge gegeben, kann vorgesehen sein, die Prüfkriterien der gewichteten Reihenfolge entsprechend nacheinander zu prüfen und die Prüfung abzubrechen, wenn die notwendige Teilmenge erfüllt ist, beispielsweise eine Mindestanzahl. Die Prüfkriterien können ein oder mehrere der folgenden Prüfkriterien umfassen: Ausleuchtung des Portraitbildes, Hintergrund des Portraitbildes, Bildkontrast, Kopfposition, Augen und Blickrichtung, Kopfbedeckung, Sitz einer Brille und/oder weitere Prüfkriterien dafür, ob das Gesichtsbild dem ICAO-Standard für Passbilder für maschinenlesbare Sicherheitsdokumente genügt. Beispielsweise kann mittels der Prüfkriterien geprüft werden, ob das Gesichtsbild dem folgenden Standard genügt: *"Technical Report - Portrait Quality (Reference Facial Images for MRTD)"* (Version 1.0 aus April 2018 oder aktuellere Fassung). Darin sind Standardkriterien definiert, die Portrait- oder Gesichtsbilddaten erfüllen müssen, um als digitales biometrisches Passbild für ein maschinenlesbares Sicherheitsdokument geeignet zu sein.

Es kann vorgesehen sein, dass das Verfahren für Gesichtsbilder mit einer gegenüber einer Original-Bildauflösung der Videobildaufnahme verringerten Bildauflösung durchgeführt wird, wobei vor dem Erzeugen des Bilddatensatzes unter Verwendung des ausgewählten Gesichtsbildes ein Ausführen der Posenprüfung für ein dem ausgewählten Gesichtsbild entsprechendes Bild in der Original-Bildauflösung und/oder ein Ausführen der Schritte im Zusammenhang mit dem Bestimmen der Erfüllung von Prüfkriterien bezüglich der Eignung für ein biometrisches Passbild für ein dem ausgewählten Gesichtsbild entsprechendes Bild in der Original-Bildauflösung vorgesehen ist. Hierbei ist das Erzeugen des Bilddatensatzes unter Verwendung des dem ausgewählten Gesichtsbild entsprechenden Bildes in der Original-Bildauflösung vorgesehen. Somit ist nach der Auswahl eines Gesichtsbildes auf Basis einer Prüfung mit verringerter Auflösung eine zusätzliche Prüfung mit Original-Auflösung vorgesehen. Schlägt die Prüfung mit Original-Auflösung fehl, wird gemäß den entsprechend vorgesehenen Verfahrensschritten die Prüfung weiterer Gesichtsbilder mit verringerter Bildauflösung fortgesetzt. Bei erfolgreicher Prüfung mit Original-Auflösung wird das ausgewählte Gesichtsbild bestätigt und in Original-Auflösung verwendet.

Wenn innerhalb einer vorgegebenen Zeit oder nach der Verarbeitung einer vorgegebenen Anzahl von Gesichtsbildern nicht erfolgreich ein Bilddatensatz erzeugt wurde, kann ein Abbruch des Verfahrens vorgesehen sein. In diesem Fall kann eine Wiederholung des Verfahrens vorgesehen sein. Insbesondere kann das Verfahren automatisch von Anfang durchgeführt werden. Alternativ oder zusätzlich kann eine Ausgabe an die Person vorgesehen sein, wobei mit der Ausgabe eine Anweisung an die Person zum Widerholen des Verfahrens ausgegeben wird. Es können Wiederholungen des Verfahrens vorgesehen sein, bis erfolgreich ein Bilddatensatz für ein biometrisches Passbild bestimmt ist.

Insofern offenbarungsgemäß auf grafische Verfahren und/oder Berechnungen Bezug genommen wird, versteht sich, dass für solche Verfahren und/oder Berechnungen in einer Datenverarbeitungseinrichtung das Erstellen (und insbesondere Ausgeben) einer tatsächlichen grafischen Darstellung nicht zwangsläufig notwendig ist und das offenbarungsgemäße Verfahren auch ohne ein solches Erstellen einer tatsächlichen grafischen Darstellung ausgeführt werden kann. Beispielsweise sind dem Fachmann Verfahren wohlbekannt, mit denen sich ein Abstand von Koordinatenpunkten zu einem Referenzpunkt rechnerisch bestimmen lässt, ohne dass es eines (grafischen) Auftragens der Punkte in einem Koordinatensystem bedarf, insbesondere über Matrizenberechnungen.

Die oben im Zusammenhang mit dem Verfahren zum Bestimmen eines Bilddatensatzes für ein biometrisches Passbild beschriebenen Ausführungen können bei der Vorrichtung zum Bestimmen eines Bilddatensatzes für ein biometrisches Passbild sowie dem Verfahren zum Personalisieren eines Sicherheitsdokuments entsprechend vorgesehen sein und umgekehrt.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: ein Ablaufdiagramm eines Verfahrens zum Bestimmen eines Bilddatensatzes für ein biometrisches Passbild;
- Fig. 2: ein Ablaufdiagramm eines weiteren Verfahrens zum Bestimmen eines Bilddatensatzes für ein biometrisches Passbild;
- Fig. 3a: Verläufe von Dichteverhältnissen über eine Folge von Gesichtsbildern gemäß einem Verfahren zum Bestimmen eines Bilddatensatzes für ein biometrisches Passbild;
- Fig. 3b: ein Diagramm mit Gesichtsbildern der Abfolge gemäß Fig. 3a zugeordneten Koordinatenpunkten, die einem Dichteverhältnis in dem betreffenden Gesichtsbild entsprechen;
- Fig. 3c: eine Darstellung von Koordinatenpunkten im Umgebungsbereich eines Referenzpunkts;
- Fig. 4a: Verläufe von Dichteverhältnissen über eine andere Folge von Gesichtsbildern gemäß einem Verfahren zum Bestimmen eines Bilddatensatzes für ein biometrisches Passbild;
- Fig. 4b: ein Diagramm mit Gesichtsbildern der Abfolge gemäß Fig. 4a zugeordneten Koordinatenpunkten, die einem Dichteverhältnis in dem betreffenden Gesichtsbild entsprechen;
- Fig. 4c: eine Darstellung von Koordinatenpunkten im Umgebungsbereich eines Referenzpunkts;
- Fig. 5: Diagramme mit Bezug zu einer weiteren Ausgestaltung des offenbarungsgemäßen Verfahrens;
- Fig. 6: eine schematische Darstellung einer Anordnung für eine Vorrichtung zum Bestimmen eines Bilddatensatzes für ein biometrisches Passbild; und
- Fig. 7: eine schematische Darstellung einer weiteren Anordnung für eine Vorrichtung zum Bestimmen eines Bilddatensatzes für ein biometrisches Passbild.

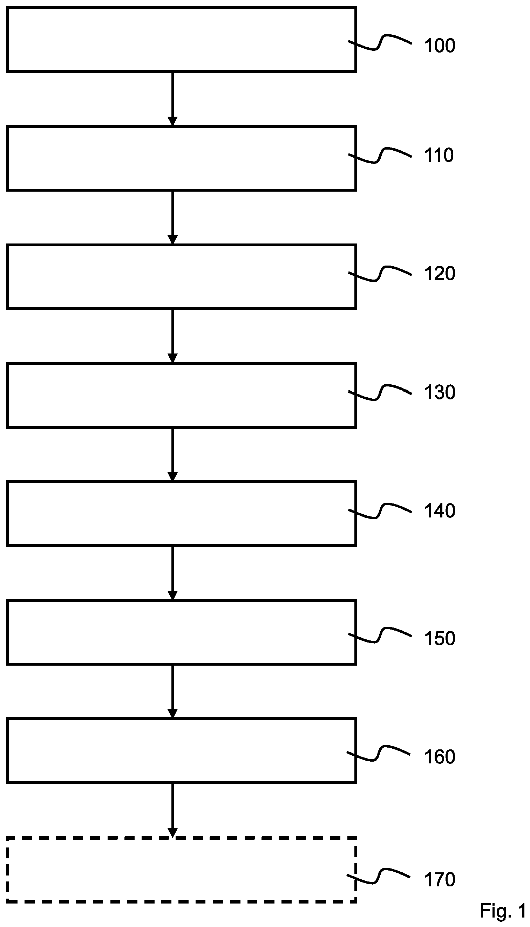

Die Fig. 1 zeigt ein Ablaufdiagramm eines Verfahrens zum Bestimmen eines Bilddatensatzes für ein biometrisches Passbild. In einem ersten Schritt 100 wird aus einer Videobildaufnahme, die ein Gesicht einer Person zeigt, für welche der Bilddatensatz bestimmt werden soll, eine Folge von Gesichtsbildern bestimmt. Beispielsweise können hierzu Standbilder aus der Videobildaufnahme extrahiert und als digitale Gesichtsbilder bereitgestellt werden. Für jedes der Gesichtsbilder werden nachfolgend die Schritte 110 bis 150 ausgeführt. Dies erfolgt fortlaufend aus der andauernden Videoaufnahme.

Hierbei werden in Schritt 110 in dem jeweiligen Gesichtsbild biometrische Landmarks bestimmt, wobei die Position der Landmarks in dem Gesichtsbild bestimmt wird und die Landmarks über ihre Definition vorgegeben sind, also beispielsweise Zentrum des linken Auges. Geeignete Landmarks für die biometrische Aufbereitung von Gesichtsbildern sowie Verfahren für deren Bestimmung sind dem Fachmann hierbei grundsätzlich bekannt.

Nachfolgend wir das Gesichtsbild in Schritt 120 in Sektoren aufgeteilt. Beispielhaft wird der Fall beschrieben, dass das Gesicht in vier Sektoren aufgeteilt wird, wobei jedoch eine Aufteilung in eine andere Anzahl von Sektoren möglich ist. In dem Gesichtsbild werden Begrenzungslinien definiert, die durch bestimmte Landmarks verlaufen, im vorliegenden Beispiel zwei Begrenzungslinien, von denen eine erste von der Stirnmitte zum Kinn verläuft und das in dem Gesichtsbild dargestellte Gesicht in einen linken und einen rechten Abschnitt aufteilt, und von denen eine zweite Begrenzungslinie von der linken Ohroberkante zur rechten Ohroberkante verläuft und das Gesicht in einen obere Abschnitt und einen unteren Abschnitt aufteilt. Mittels der zwei Begrenzungslinien ist das Gesichtsbild in vier Sektoren aufgeteilt.

In Schritt 130 wird dann für jeden der Sektoren eine Landmark-Dichte bestimmt. Hierzu wird für jeden der Sektoren die Anzahl der in dem Sektor liegenden Landmarks ermittelt und durch den Flächeninhalt des betreffenden Sektors geteilt. In dem dargestellten Beispiel mit vier Sektoren erfolgt das Ermitteln der Landmark-Dichte für zusammengefasste Sektoren, wobei jeweils zwei Sektoren zu einem oberen, einem unteren, einem linken und einem rechten Sektor zusammengefasst werden. Jeder der ursprünglichen vier Sektoren ist somit Bestandteil von zwei zusammengefassten Sektoren. Die Landmark-Dichte wird dann für den oberen, den unteren, den linken und den rechten Sektor ermittelt, wobei für jeden der zusammengefassten Sektoren die Anzahl der in dem Sektor liegenden Landmarks (die Summe der in den konstituierenden ursprünglichen Sektoren liegenden Landmarks) ermittelt und durch den Flächeninhalt des betreffenden zusammengefassten Sektors (die Summe der Flächen der konstituierenden ursprünglichen Sektoren) geteilt wird.

Hierauf basierend wird dann in Schritt 130 weiterhin ein Dichteverhältnis zwischen den Sektoren bestimmt. Hierzu wird eine Differenz zwischen den Landmark-Dichten des linken und des rechten Sektors sowie eine Differenz zwischen den Landmark-Dichten des oberen und des unteren Sektors bestimmt. Die Differenz gibt das jeweilige Dichteverhältnis an, wobei anhand des Vorzeichens der Differenz erkennbar ist, welcher der Sektoren die höhere Landmark-Dichte aufweist.

Anschließend wird dann in Schritt 140 für das betreffende Gesichtsbild ein Koordinatenpunkt bestimmt. In der beschriebenen Ausführung wird hierbei das Dichteverhältnis zwischen dem linken und dem rechten Sektor als X-Koordinate und das Dichteverhältnis zwischen dem oberen und dem unteren Sektor als Y-Koordinate in einem zweidimensionalen Koordinatensystem bestimmt.

In Schritt 150 wird für ein aktuelles Gesichtsbild eine Posenprüfung ausgeführt. Hierbei wird bestimmt, ob der für das Gesichtsbild in Schritt 140 bestimmte Koordinatenpunkt in einem Toleranzbereich um einen für die Person individuellen Referenzpunkt liegt. Die Prüfung wird in dem zweidimensionalen Koordinatensystem durchgeführt. Der Referenzpunkt gibt hierbei eine Nullpose an, also eine neutrale Kopfstellung der Person mit direktem Blick auf eine Kamera mittels welcher die Videobildaufnahme gefertigt wird.

Falls der Koordinatenpunkt nicht in dem Toleranzbereich liegt, wird die Posenprüfung für ein nächstes aktuelles Gesichtsbilds für die Person durchgeführt. Falls der Koordinatenpunkt in dem Toleranzbereich liegt, wird in Schritt 160 das Gesichtsbild als ausgewähltes Gesichtsbild bestimmt und der Bilddatensatz wird unter Verwendung des ausgewählten Gesichtsbildes erzeugt.

In einem Verfahren zum Personalisieren eines Sicherheitsdokuments wird in einem (insofern optionalen) zusätzlichen Schritt 170 der Bilddatensatz in einer Personalisierungseinrichtung bereitgestellt und zum Personalisieren eines Sicherheitsdokument wird der Bilddatensatz in der Personalisierungseinrichtung verarbeitet und eine Repräsentation des ausgewählten Gesichtsbildes wird auf dem Sicherheitsdokument aufgebracht. Alternativ zum Personalisieren eines Sicherheitsdokuments kann der Bilddatensatz in anderen Anwendungen eingesetzt werden, beispielsweise in der Online-Identifikation.

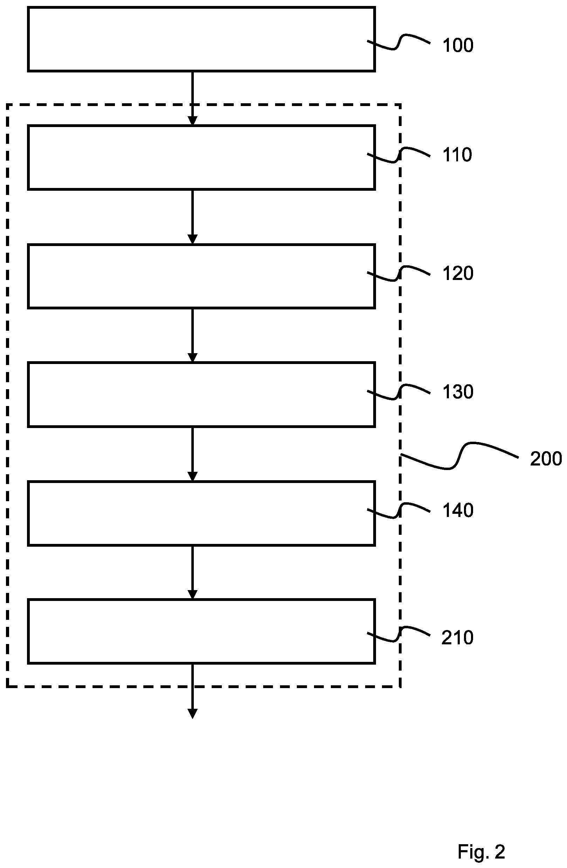

Die Fig. 2 zeigt zusätzliche vorgelagerte Schritte einer spezifische Ausgestaltung des Verfahrens gemäß Fig. 1, bei dem der Referenzpunkt im Rahmen des Verfahrens in einem iterativen Bestimmungsverfahren 200 bestimmt wird. Hierbei wird, bevor im Schritt 140 bestimmte Koordinatenpunkte für eine Posenprüfung herangezogen werden, Koordinatenpunkte für die Bestimmung des Referenzpunkts genutzt, indem jeweils nach dem Bestimmen 140 des Koordinatenpunkts für ein Gesichtsbild ein Schritt 210 für das Bestimmen des Referenzpunktes durchgeführt wird, bei dem der soeben neu bestimmte Koordinatenpunkt zusammen mit den für vorherige Gesichtsbilder bestimmten Koordinatenpunkten für die iterative Bestimmung des Referenzpunkts herangezogen wird, wie nachfolgend beispielhaft im Einzelnen erläutert.

An den Abschluss der iterativen Bestimmung des Referenzpunkts schließt sich dann das Verfahren nach Fig. 1 an, in dem für nachfolgende Gesichtsbilder auf den Schritt 140 der Schritt 150 folgt, bei dem für den betreffenden Koordinatenpunkt die Posenprüfung durchgeführt wird.

Alternativ zu einer iterativen Bestimmung des Referenzpunktes kann der Referenzpunkt auch in einem separaten Schritt bestimmt oder bereitgestellt werden.

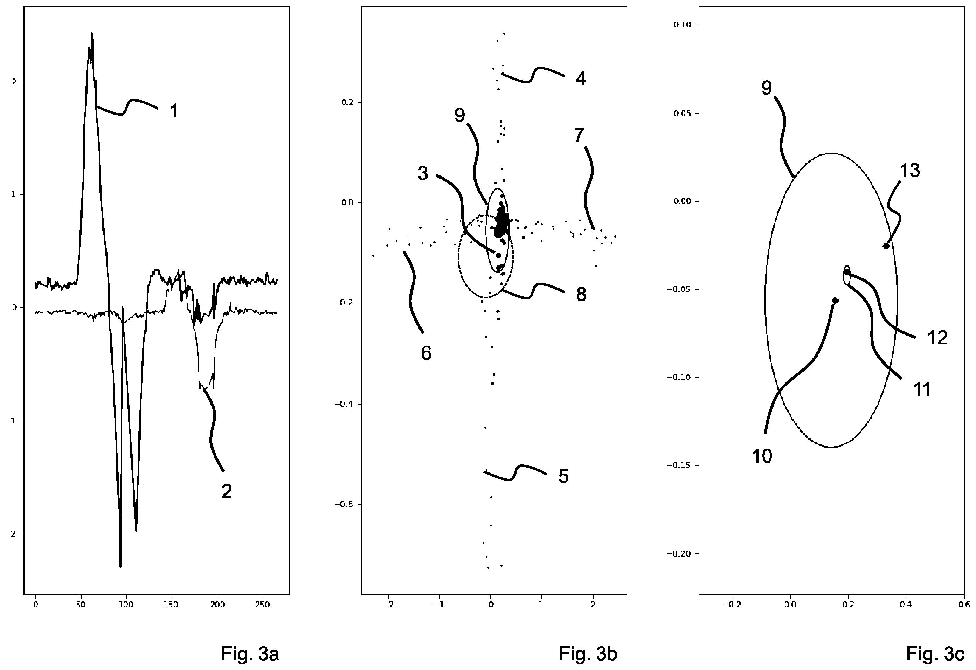

Die Figuren 3a bis 3c veranschaulichen grafisch ein offenbarungsgemäßes Verfahren zum Bestimmen eines Bilddatensatzes für ein biometrisches Passbild, welches für eine Videobildaufnahme einer Person durchgeführt wird, wobei ein Frame der Videobildaufnahme einer Gesichtsaufnahme entspricht. Hierbei bewegt die Person während der Videobildaufnahme ihren Kopf aus einer wahrgenommenen Neutralposition nach oben, unten, links und rechts und jeweils zurück in die wahrgenommene Neutralposition.

In der Fig. 3a sind als Graph 1 das Dichteverhältnis (Ordinatenachse) zwischen Landmark-Dichten des linken und des rechten Sektors über der fortlaufenden Frame-Nummerierung (Abszissenachse) und als Graph 2 das Dichteverhältnis (Ordinatenachse) zwischen dem oberen und dem unteren Sektor über der fortlaufenden Frame-Nummerierung aufgetragen. Hierbei ist im linken Teil der Abbildung eine Link-Rechts-Bewegung des Kopfes als starke Verschiebung der Dichteverhältnisse in Graph 1 zu erkennen. Eine Auf-Ab-Kopfbewegung ist durch eine starke Verschiebung der Dichteverhältnisse in Graph 2 im rechten Teil der Abbildung 3a gekennzeichnet.

Die Fig. 3b zeigt für jedes der Gesichtsbilder einen Koordinatenpunkt, wobei auf der Abszissenachse das Dichteverhältnis zwischen dem linken und dem rechten Sektor und auf der Ordinatenachse das Dichteverhältnis zwischen dem oberen und dem unteren Sektor aufgetragen sind. Hierbei sind Koordinatenpunkte 3, die einer eher neutralen Kopfausrichtung entsprechen, sowie einer Kopfrotation nach oben entsprechende Koordinatenpunkte 4, einer Rotation nach unten entsprechende Koordinatenpunkte 5, einer Rotation nach rechts entsprechende Koordinatenpunkte 6 und einer Rotation nach links entsprechende Koordinatenpunkte 7 erkennbar. Die als neutral eingeordneten Koordinatenpunkte 3 liegen hierbei in einem zur Veranschaulichung eingezeichneten Bereich 8.

Die Koordinatenpunkte sind entsprechend ihrem Abstand zu einem Hilfspunkt gewichtet, wobei eine höhere Wichtung erfolgt, je geringer der Abstand eines Koordinatenpunktes zu dem Hilfspunkt ist. Der Wichtung gemäß wird jedem Koordinatenpunkt eine Masse zugeordnet und eine höhere Wichtung bzw. höhere Masse ist in der Fig. 3b an einer größeren Darstellung des betreffenden Koordinatenpunkts erkennbar. Der Hilfspunkt ist ein Koordinatenpunkt, der Landmark-Dichteverhältnisse angibt, die einem Mittelwert über eine Population für eine eingenommene gewünschten neutralen Kopfstellung (Nullpose) entsprechen. Der Hilfspunkt wurde zuvor empirisch ermittelt und kann auch als "human common zero" bezeichnet werden. In der Fig. 3b ist der Hilfspunkt selbst nicht erkennbar, es ist jedoch eine Toleranzumgebung 9 um den Hilfspunkt dargestellt, die einer gemäß bekannten statistischen Verfahren ermittelten 2-Sigma- (2σ-) Abweichung um den empirisch bestimmten Hilfspunkt entspricht.

Unter Betrachtung der Koordinatenpunkte als an dem Koordinatenpunkt angeordnete Massen gemäß der Gewichtung wird mit jedem hinzukommenden Bild und somit jedem hinzukommenden Koordinatenpunkt erneut der Massenmittelpunkt über alle Gesichtsbilder, also Koordinatenpunkte ermittelt. Es wird dann der Massenmittelpunkt zum Zeitpunkt des Einstellens des Ermittelns neuer Massenmittelpunkte als individuelle Nullpose der Person bestimmt und als Referenzwert für die Auswahl eines Gesichtsbilds für das Erzeugen eines Bilddatensatzes gewählt. Das Ermitteln neuer Massenmittelpunkte wird eingestellt, wenn ein Abbruchkriterium erfüllt ist. Vorzugsweise handelt es sich hierbei um ein Qualitätskriterium, welches die Eignung des Referenzpunktes für das weitere Verfahren kennzeichnet. Alternativ kann das Ermitteln des Referenzpunktes (Ermitteln neuer Massenmittelpunkte) beispielsweise auch nach der Berücksichtigung einer festgelegten Anzahl an Koordinatenpunkten als Abbruchkriterium beendet werden.

Die Fig. 3c veranschaulicht dies in einer Detaildarstellung. Der Hilfspunkt gibt das human common zero an und ist in der Fig. 3c nicht selbst dargestellt. Stattdessen ist die Toleranzumgebung 9 um den Hilfspunkt eingezeichnet, deren Mittelpunkt der Hilfspunkt ist. Der Koordinatenpunkt 10 ist der Koordinatenpunkt mit dem geringsten Abstand zum Hilfspunkt, also zum human common zero. Zu der zuvor bestimmten individuellen Nullpose ist ebenfalls eine Toleranzumgebung 11 eingezeichnet, deren Mittelpunkt die individuelle Nullpose angibt, und die gemäß einer geeigneten Auswahl eines akzeptablen (in dem Koordinatensystem euklidischen) Abstandes von der individuellen Nullpose ermittelt ist. In einer alternativen Ausgestaltung kann die Toleranzumgebung stattdessen anhand eines statistischen Werts festgelegt werden, beispielsweise gemäß bekannten statistischen Verfahren als 2-Sigma- (2σ-) Abweichung um die individuelle Nullpose ermittelt sein. Der Koordinatenpunkt 12 wird als ausgewähltes Gesichtsbild bestimmt, weil er als erster ermittelter Koodinatenpunkt nach Bestimmen des individual zero (Referenzpunkt) innerhalb des Bereichs 11 liegt.

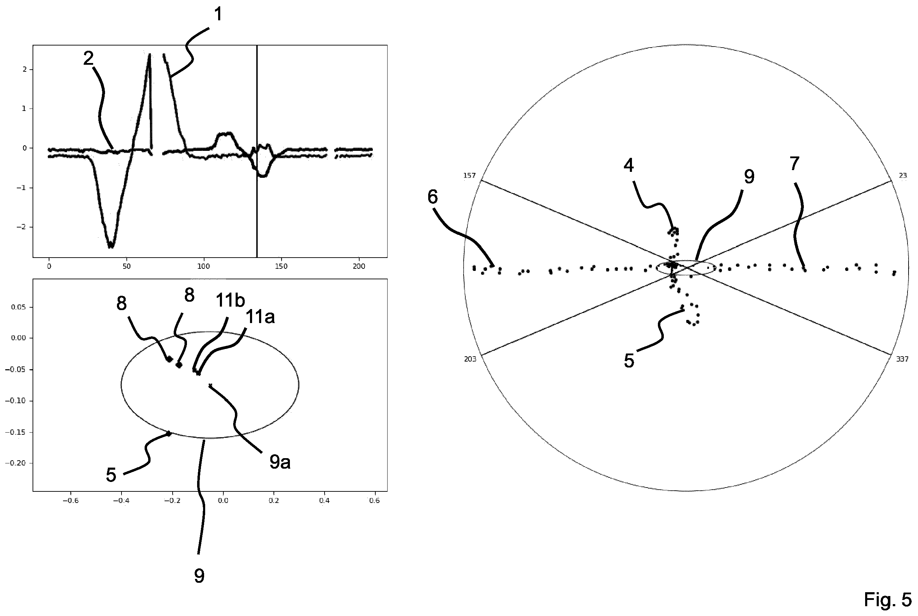

In einer alternativen Ausgestaltung kann das Gesichtsbild ausgewählt werden, dessen Koordinatenpunkt den geringsten Abstand zum human common zero aufweist, also in der Darstellung der Fig. 3c der Koordinatenpunkt 10. Ein solches Vorgehen kann insbesondere für Ausgestaltungen vorgesehen sein, in denen nicht über gesonderte Verfahrensschritte, wie beispielhaft unten im Zusammenhang mit der Fig. 5 beschrieben, sichergestellt ist, dass ein für die Beurteilung der Pose geeignetes individual zero bestimmt wird. Hier kann dann eine Prüfung des individual zero vorgesehen sein, wobei dann für den Fall, dass das individual zero festgelegten Prüfkriterien nicht genügt, das Gesichtsbild ausgewählt werden, dessen Koordinatenpunkt den geringsten Abstand zum human common zero aufweist.

Als weitere Alternative kann vorgesehen sein, das Gesichtsbild auszuwählen, dessen Koordinatenpunkt den geringsten Abstand zu den Grenzen des Toleranzbereichs 9 aufweist also in der Darstellung der Fig. 3c der Koordinatenpunkt 13.

Es kann eine nachgelagerte Überprüfung stattfinden, ob das ausgewählte Gesichtsbild Prüfkriterien für ein biometrisches Passbild erfüllt. Sollte dies nicht der Fall sein kann ein anderes Gesichtsbild ausgewählt werden. Dies ist das nächste Gesichtsbild, dessen Koordinatenpunkt innerhalb des Toleranzbereichs 12 um die individuelle Nullpose liegt.

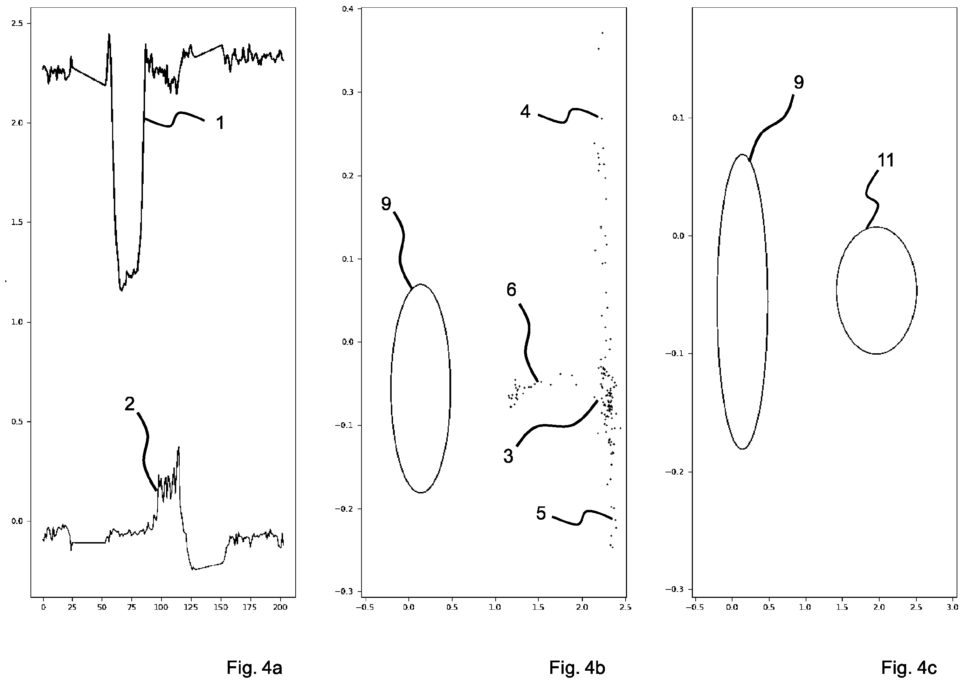

Die Figuren 4a, 4b und 4c veranschaulichen grafisch das Verfahren zum Bestimmen eines Bilddatensatzes für eine weitere Videobildaufnahme einer Person. Hierbei entspricht die Darstellung in der Fig. 4a der Darstellung in der Fig. 3a, die Darstellung in der Fig. 4b der Darstellung in der Fig. 3b und die Darstellung in der Fig. 4c der Darstellung in der Fig. 3c jeweils für die weitere Videobildaufnahme. In den Figuren 4a, 4b und 4c wurde als wahrgenommene Neutralposition von der aufgenommenen Person eine Pose eingenommen, in welcher der Kopf gegenüber einer der Kamera direkt zugewandten Pose nach links rotiert ist.

Entsprechend ist in der Fig. 4a zu erkennen, dass für alle Frames eine höhere Landmark-Dichte in dem linken Sektor (der aufgrund der Perspektive eine kleinere Fläche hat) als in dem rechten Sektor vorliegt. Im Vergleich hierzu entspricht das Oben-Unten-Dichteverhältnis eher dem in der Fig. 3a erkennbaren Verlauf. In der Fig. 4b zeigt sich, dass alle ermittelten Koordinatenpunkte außerhalb des Toleranzbereichs 9 um das human common zero liegen und zwar einer Rotation nach links hiervon ausgehend entsprechend. Aufgrund statistischer Streuung ist der Toleranzbereich 11 um die individuelle Nullpose in der Fig. 4c gegenüber der Darstellung der Fig. 3c vergrößert. In der Fig. 4c liegt der Toleranzbereich 11 um die individuelle Nullpose vollständig außerhalb des Toleranzbereichs 9 um das human common zero.

Wird als Abbruchkriterium eine feste Anzahl von für die Bestimmung des Referenzpunktes berücksichtigten Koordinatenpunkten festgelegt, kann es in einem Fall, der wie in der Fig. 4 gezeigt gelagert ist, vorkommen, dass mit dem Verfahren kein Gesichtsbild bestimmt wird, welches einer nachgelagerten Prüfung genügt. Die Fig. 5 zeigt eine Ausgestaltung, in der dieses Problem nicht besteht.

In der Fig. 5 oben links sind wiederum als Graph 1 das Dichteverhältnis (Ordinatenachse) zwischen Landmark-Dichten des linken und des rechten Sektors über der fortlaufenden Frame-Nummerierung (Abszissenachse) und als Graph 2 das Dichteverhältnis (Ordinatenachse) zwischen dem oberen und dem unteren Sektor über der fortlaufenden Frame-Nummerierung aufgetragen. In der Fig. 5 unten links ist die Toleranzumgebung 9 um das human common zero 9a mit Koordinatenpunkten 8 einer neutralen Kopfausrichtung sowie einem Koordinatenpunkt 5 entsprechend einer Kopfausrichtung nach unten abgebildet. Es sind zudem ein derzeitiger (letzter) Massenmittelpunkt (individual zero) 11a und ein vorheriger Massenmittelpunkt 11b erkennbar. Gemäß der Darstellung der Fig. 5 ist das Abbruchkriterium erfüllt, so dass der derzeitige Massenmittelpunkt 11a als Referenzpunkt festgelegt wird.

Das Abbruchkriterium ist in der Fig. 5 rechts illustriert. um das human common zero sind vier Hilfssektoren angeordnet, die einen jeweiligen Winkelbereich von 23° bis 157°, 157° bis 203°, 203° bis 337° und 337° bis 23° von der Horizontalen abdecken. Für das Prüfen des Abbruchskriteriums wird für jeden Hilfssektor die Anzahl Koordinatenpunkte bestimmt, die in dem Hilfssektor, jedoch außerhalbe des Toleranzbereichs 9 um da human common zero liegen. Wenn für jeden Hilfssektor die festgestellte Anzahl einen jeweiligen Mindestwert erreicht oder überschritten hat, ist das Abbruchkriterium erfüllt und der derzeitige Massenmittelpunkt 11a wird als Referenzpunkt festgelegt. Auf diese Weise ist sichergestellt, dass eine ausreichende Anzahl von Koordinatenpunkten für jede Kopfausrichtung (oben, unten, links, rechts) zur Verfügung steht, um einen sinnvollen Referenzpunkt zu erhalten.

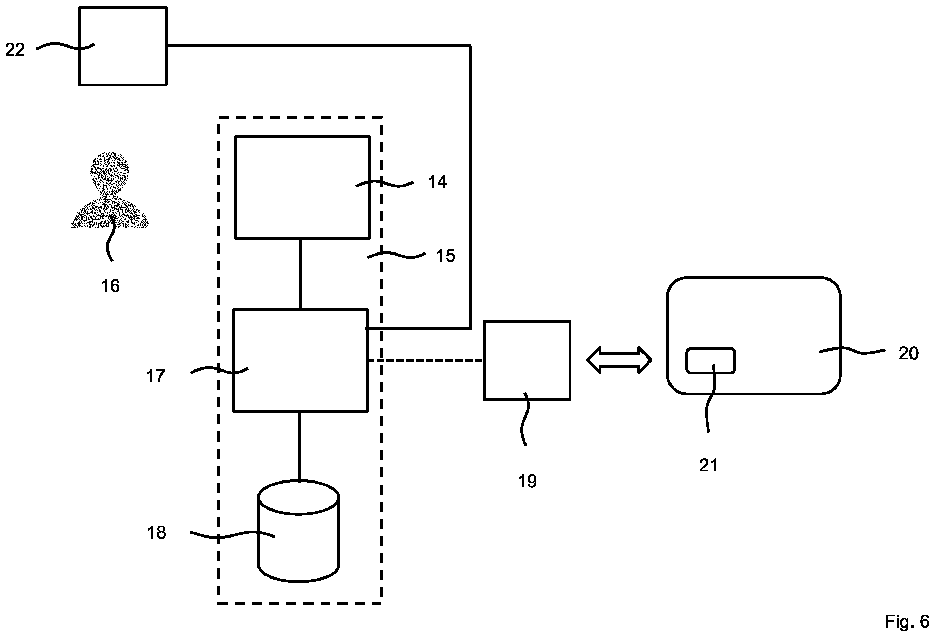

Die Fig. 6 zeigt eine schematische Darstellung einer Anordnung für eine Vorrichtung zum Bestimmen eines Bilddatensatzes für ein biometrisches Passbild. Mit Hilfe einer Videobildaufnahmevorrichtung 14, die zum Beispiel mit einer Videobildkamera gebildet und im gezeigten Beispiel als Teil einer Passbildaufnahmeeinrichtung 15 bereitgestellt ist, werden für eine Person 16 Portrait- oder Gesichtsbilder im Rahmen einer Videobildaufnahme aufgenommen. Mit Hilfe einer Datenverarbeitungseinrichtung 17, die mit der Videobildaufnahmevorrichtung 15 verbunden ist, werden die in dem Videodatenstrom mit einer Bildwiederholfrequenz enthaltenen Gesichtsbilder in einer Speichereinrichtung 18 als digitale Gesichtsbilder abgelegt.

Anschließend wird in der Datenverarbeitungseinrichtung 17 das offenbarungemäße Verfahren ausgeführt, um aus der Folge von Gesichtsbildern einen Bilddatensatz zu erzeugen.

In der Ausführung der Fig. 6 ist die Passbildaufnahmeeinrichtung 15 mit einer Personalisierungseinrichtung 19 verbunden, an welche der Bilddatensatz wahlweise übertragen werden kann. Hierbei ist die Personalisierungseinrichtung 19 eingerichtet, ein Sicherheitsdokument 20 zu personalisieren. Hierzu kann die Personalisierungseinrichtung 19 mit einer Druckeinrichtung ausgeführt sein, mittels der das biometrische Passbild auf dem Sicherheitsdokument 20 aufgedruckt wird. Alternativ oder ergänzend kann vorgesehen sein, die Passbilddaten in einer Speichereinrichtung 21 des Sicherheitsdokuments 20 abzulegen. Hierdurch ist das Sicherheitsdokument personalisiert und ermöglicht anhand des biometrischen Passbildes eine Personenidentifizierung.

Werden für das Verfahren Probleme festgestellt, beispielsweise weil eine vorgesehene Prüfung negativ verlaufen ist, können hierauf in der Passbildaufnahmeeinrichtung 15 Steuerdaten erzeugt werden, um das weitere Vorgehen zu beeinflussen, dahingehend, dass das Verfahren abgebrochen, wiederholt oder verlängert wird. In einer Ausgestaltung kann vorgesehen sein, dass die Steuerdaten eingerichtet sind, eine Ausgabe über eine Ausgabeeinrichtung 22 an die Person 16 zu steuern, derart, dass ein Benutzerhinweis zum Beheben des Fehlers an die Person 16 ausgegeben wird, was einen visuellen und / oder akustischen Hinweis an die Person umfassen kann, beispielsweise eine Aufforderung, eine andere Pose einzunehmen, eine Kopfbedeckung abzunehmen, und / oder eine Aufforderung beide Augen zu öffnen. Die Ausgabeeinrichtung 22, welche zum Beispiel mit einem Display gebildet sein kann, kann wahlweise in die Passbildaufnahmeeinrichtung 15 integriert sein, zum Beispiel bei der Ausbildung in einem Terminalgerät zum Erfassen von personenbezogenen Daten für das Sicherheitsdokument 20. Die Ausgabeeinrichtung 22 kann zum Empfangen von Benutzereingaben als Ein-/ Ausgabeeinrichtung ausgeführt sein.

Alternativ oder ergänzend können als Reaktion auf das Feststellen eines Fehlers Steuerdaten erzeugt werden, die eingerichtet sind, einen Betriebsparameter der Videobildaufnahmevorrichtung 15 und / oder einer dieser zugeordneten Beleuchtungseinrichtung für weitere Gesichtsbilder im Rahmen der Videobildaufnahme zu verbessern, beispielsweise für eine verbesserte Ausleuchtung der Portraitbilder.

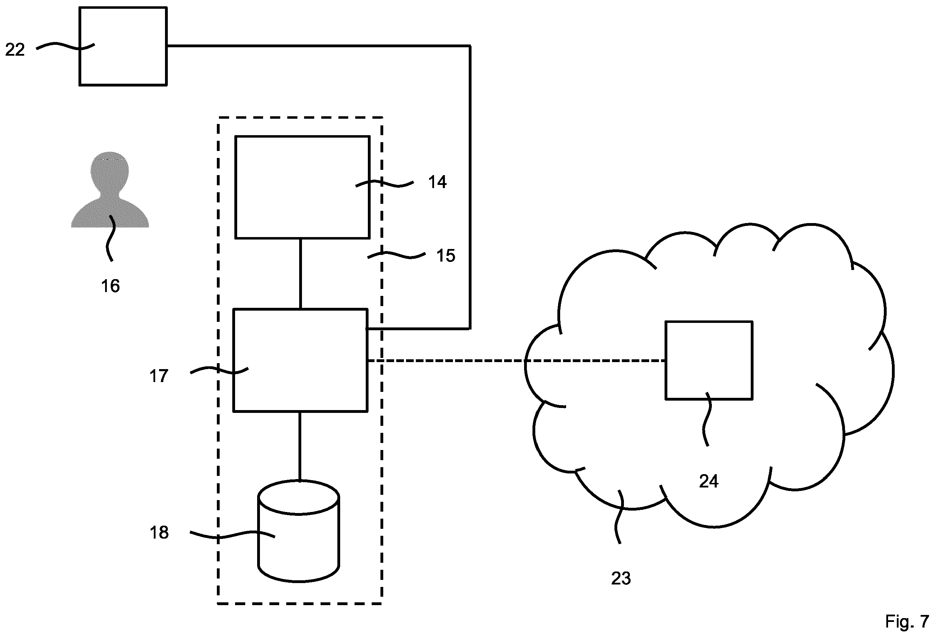

Die Fig. 7 zeigt eine alternative Ausgestaltung der Anordnung der Fig. 6 in der statt einer Verbindung zu einer Personalisierungseinrichtung 19 eine Verbindung ins Internet 23 bereitgestellt ist. Über die Internetverbindung kann der Bilddatensatz zur weiteren Verwendung an einen Server 24 übermittelt werden. Beispielsweise kann der Server 24 Teil eines Netzwerks eines Diensteanbieters sein, welcher den Bilddatensatz für die biometrische Identifizierung der Person als berechtigter Nutzer einer Dienstleistung verwendet, wobei entsprechende Verfahren zur Nutzung eines ein biometrisches Passbild angebenden Bilddatensatzes dem Fachmann in verschiedenen Ausgestaltungen prinzipiell bekannt sind.

Insbesondere in diesem Zusammenhang, aber auch in anderen Ausgestaltungen, kann die Passbildaufnahmeeinrichtung 15 mit einem persönlichen elektronischen Gerät der Person gebildet sein, beispielsweise einem Computer, einem Mobiltelefon, einem Tablet-Computer oder ähnlichem, auf dem zum Ausführen des Verfahrens eine entsprechende Softwareanwendung (App) läuft.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Graph Dichteverhältnisse links-rechts
- 2: Graph Dichteverhältnisse oben-unten
- 3: Koordinatenpunkte neutrale Kopfausrichtung
- 4: Koordinatenpunkte Kopfausrichtung nach oben
- 5: Koordinatenpunkte Kopfausrichtung nach unten
- 6: Koordinatenpunkte Kopfausrichtung nach rechts
- 7: Koordinatenpunkte Kopfausrichtung nach links
- 8: Bereich neutrale Kopfausrichtung
- 9: Toleranzumgebung um Hilfspunkt
- 10: Koordinatenpunkt
- 11: Toleranzumgebung um Referenzpunkt
- 12: Koordinatenpunkt ausgewähltes Gesichtsbild
- 13: Koordinatenpunkt
- 14: Videobildaufnahmevorrichtung
- 15: Passbildaufnahmeeinrichtung
- 16: Person
- 17: Datenverarbeitungseinrichtung
- 18: Speichereinrichtung
- 19: Personalisierungseinrichtung
- 20: Sicherheitsdokument
- 21: Speichereinrichtung
- 22: Ausgabeeinrichtung
- 23: Internet
- 24: Server

- 100...210: Verfahrensschritte

## Patentansprüche

1. Verfahren zum Bestimmen eines Bilddatensatzes für ein biometrisches Passbild, mit:
- Bestimmen einer Folge von Gesichtsbildern für eine Person (16) aus einer Videobildaufnahme;
- für jedes der Gesichtsbilder:
- Bestimmen einer Mehrzahl von vorgegebenen biometrischen Landmarks in dem Gesichtsbild;
- Aufteilen des Gesichtsbilds in mehrere Sektoren, wobei das Aufteilen mittels wenigstens einer das Gesichtsbild unterteilenden Begrenzungslinie erfolgt, welche durch eine vorgegebene Auswahl der biometrischen Landmarks verläuft;
- Bestimmen einer Landmark-Dichte für jeden der Sektoren, wobei die Landmark-Dichte jeweils dem Verhältnis aus der Anzahl der in dem betreffenden Sektor liegenden Landmarks zu der Fläche des Sektors entspricht;
- Bestimmen eines Dichteverhältnisses zwischen Landmark-Dichten, die für innerhalb des Gesichtsbildes gegenüberliegende Sektoren bestimmt wurden; und
- Bestimmen eines Koordinatenpunkts (3, 4, 5, 6, 7, 10, 12, 13) für das Gesichtsbild, wobei ein Koordinatenwert des Koordinatenpunkts (3, 4, 5, 6, 7, 10, 12, 13) dem Dichteverhältnis entspricht;
- Auswahl eines aktuellen Gesichtsbilds aus der Folge von Gesichtsbildern;
- Ausführen einer Posenprüfung für das aktuelle Gesichtsbild, wobei die Posenprüfung umfasst:
- Bestimmen, ob der Koordinatenpunkt (3, 4, 5, 6, 7, 10, 12, 13) in einem Toleranzbereich um einen Referenzpunkt liegt, wobei der Referenzpunkt einen für die Person (16) individuellen Punkt darstellt, der einer gewünschten Kopfausrichtung für ein biometrisches Passbild entspricht;
- falls der Koordinatenpunkt nicht in dem Toleranzbereich liegt, Auswahl eines nächsten aktuellen Gesichtsbilds für die Person (16) aus der Videobildaufnahme und Ausführen der Posenprüfung für das nächste aktuelle Gesichtsbild; und
- falls der Koordinatenpunkt in dem Toleranzbereich liegt, Bestimmen des aktuellen Gesichtsbildes als ausgewähltes Gesichtsbild; und
- Erzeugen des Bilddatensatzes unter Verwendung des ausgewählten Gesichtsbildes.

2. Verfahren nach Anspruch 1, wobei
- das Aufteilen der Gesichtsbilder in vier Sektoren erfolgt, wobei die vier Sektoren in dem betreffenden Gesichtsbild oben links, oben rechts, unten links und unten rechts liegen;
- das Bestimmen der Landmark-Dichte Folgendes umfasst:
- Bestimmen einer Links-Landmark-Dichte, welche eine Landmark-Dichte eines Links-Sektors ist, der durch eine Zusammenfassung des oben links liegenden Sektors und des unten links liegenden Sektors gebildet ist;
- Bestimmen einer Rechts-Landmark-Dichte, welche eine Landmark-Dichte eines Rechts-Sektors ist, der durch eine Zusammenfassung des oben rechts liegenden Sektors und des unten rechts liegenden Sektors gebildet ist;
- Bestimmen einer Oben-Landmark-Dichte, welche eine Landmark-Dichte eines Oben-Sektors ist, der durch eine Zusammenfassung des oben links liegenden Sektors und des oben rechts liegenden Sektors gebildet ist; und
- Bestimmen einer Unten-Landmark-Dichte, welche eine Landmark-Dichte eines Unten-Sektors ist, der durch eine Zusammenfassung des unten links liegenden Sektors und des unten rechts liegenden Sektors gebildet ist;
- das Bestimmen des Dichteverhältnisses Folgendes umfasst:
- Bestimmen eines Links-Rechts-Dichteverhältnisses, welches ein Verhältnis zwischen der Links-Landmark-Dichte und der Rechts-Landmark-Dichte ist; und
- Bestimmen eines Oben-Unten-Dichteverhältnisses, welches ein Verhältnis zwischen der Oben-Landmark-Dichte und der Unten-Landmark-Dichte ist;
- das Bestimmen des Koordinatenpunktes (3, 4, 5, 6, 7, 10, 12, 13) in einem zweidimensionalen Koordinatensystem erfolgt, wobei der Koordinatenwert des Koordinatenpunkts (3, 4, 5, 6, 7, 10, 12, 13) in der ersten Dimension des zweidimensionalen Koordinatensystems dem Links-Rechts-Dichteverhältnis entspricht und der Koordinatenwert des Koordinatenpunkts (3, 4, 5, 6, 7, 10, 12, 13) in der zweiten Dimension des zweidimensionalen Koordinatensystems dem Oben-Unten-Dichteverhältnis entspricht; und
- der der Toleranzbereich einen zweidimensionalen Bereich um den Referenzpunkt in dem zweidimensionalen Koordinatensystem angibt.

3. Verfahren nach Anspruch 2, wobei das Aufteilen der Gesichtsbilder in mehrere Sektoren mittels einer ersten Begrenzungslinie und einer zweiten Begrenzungslinie erfolgt, wobei die erste Begrenzungslinie durch die Landmarks Stirnmitte und Kinnspitze verläuft.

4. Verfahren nach einem der Ansprüche 1 bis 3, wobei das Bestimmen der Folge von Gesichtsbildern für die Person (16) mittels Videobildaufnahme während einer Kopfbewegung der Person (16) erfolgt.

5. Verfahren nach Anspruch 4, umfassend das Erzeugen einer Ausgabe an die Person (16), wobei mit der Ausgabe eine Anweisung an die Person (16) zum Ausführen der Kopfbewegung ausgegeben wird.

6. Verfahren nach mindestens einem der vorangehenden Ansprüche, umfassend, vor dem Ausführen einer Posenprüfung, das Bestimmen des Referenzpunktes, wobei das Bestimmen des Referenzpunktes Folgendes umfasst:
- Bestimmen eines Abstands des Koordinatenpunkts (3, 4, 5, 6, 7, 10, 12, 13) zu einem Hilfspunkt, wobei der Hilfspunkt einen Mittelwert (10) über eine Population für einen Punkt darstellt, der einer gewünschten Kopfausrichtung für ein biometrisches Passbild entspricht;
- Zuordnen einer Wichtung zu dem Koordinatenpunkt (3, 4, 5, 6, 7, 10, 12, 13), wobei die Wichtung einer dem bestimmten Koordinatenpunkt (3, 4, 5, 6, 7, 10, 12, 13) zugeordneten Masse entspricht und dem betreffenden Koordinatenpunkt (3, 4, 5, 6, 7, 10, 12, 13) eine umso höhere Masse zugeordnet wird, je geringer ein Abstand des Koordinatenpunkts (3, 4, 5, 6, 7, 10, 12, 13) zu dem Hilfspunkt ist;
- Hinzufügen des Koordinatenpunkts (3, 4, 5, 6, 7, 10, 12, 13) mit Wichtung zu einer Menge von gewichteten Koordinatenpunkten (3, 4, 5, 6, 7, 10, 12, 13);
- Bestimmen eines Massenmittelpunktes der Menge von gewichteten Koordinatenpunkten (3, 4, 5, 6, 7, 10, 12, 13);
- Bestimmen des Massenmittelpunktes als vorläufigen Referenzpunkt;
- Prüfen, ob ein Abbruchkriterium erfüllt ist;
- falls das Abbruchkriterium nicht erfüllt ist, Auswahl eines nächsten aktuellen Gesichtsbilds für die Person (16) aus der Videobildaufnahme und Wiederholen der vorgenannten Schritte des Bestimmens des Referenzpunktes; und
- falls das Abbruchkriterium erfüllt ist, Bestimmen des vorläufigen Referenzpunkts als Referenzpunkt, Auswahl eines nächsten aktuellen Gesichtsbilds für die Person (16) aus der Videobildaufnahme und Ausführen der Posenprüfung für das nächste aktuelle Gesichtsbild.

7. Verfahren nach Anspruch 6, wobei ein Toleranzbereich (9) sowie mehrere Hilfssektoren um den Hilfspunkt bereitgestellt werden und wobei das Prüfen, ob ein Abbruchkriterium erfüllt ist, Folgendes umfasst:
- Bestimmen, ob der Koordinatenpunkt (3, 4, 5, 6, 7, 10, 12, 13) innerhalb des Toleranzbereichs (9) liegt;
- falls die Prüfung ergibt, dass der Koordinatenpunkt (3, 4, 5, 6, 7, 10, 12, 13) innerhalb des Toleranzbereichs (9) liegt, Bestimmen dass das Abbruchkriterium nicht erfüllt ist;
- falls die Prüfung ergibt, dass der Koordinatenpunkt (3, 4, 5, 6, 7, 10, 12, 13) nicht innerhalb des Toleranzbereichs (11) liegt, für jeden der Hilfssektoren:
- Bestimmen einer Anzahl von Koordinatenpunkten (3, 4, 5, 6, 7, 10, 12, 13) der Menge von gewichteten Koordinatenpunkten (3, 4, 5, 6, 7, 10, 12, 13), die in dem Hilfssektor und außerhalb des Toleranzbereichs (9) liegt; und
- Prüfen, ob die Anzahl geringer ist, als eine Mindestanzahl für den betreffenden Hilfssektor;
- falls für wenigstens einen der Hilfssektoren die Anzahl geringer ist als die Mindestanzahl, Bestimmen dass das Abbruchkriterium nicht erfüllt ist; und
- falls für keinen der Hilfssektoren die Anzahl geringer ist als die Mindestanzahl, Bestimmen dass das Abbruchkriterium erfüllt ist.

8. Verfahren nach Anspruch 7 und Anspruch 2, wobei wenigstens vier Hilfssektoren um den Hilfspunkt bereitgestellt werden, die jeweils einen Winkelbereich um den Hilfspunkt umfassen.

9. Verfahren nach Anspruch 6, wobei das Prüfen, ob ein Abbruchkriterium erfüllt ist, Folgendes umfasst:
- falls eine Anzahl von Koordinatenpunkten in der Menge von gewichteten Koordinatenpunkten (3, 4, 5, 6, 7, 10, 12, 13) geringer ist als eine vorbestimmte Mindestanzahl, Bestimmen dass das Abbruchkriterium nicht erfüllt ist; und
- falls die Anzahl von Koordinatenpunkten in der Menge von gewichteten Koordinatenpunkten (3, 4, 5, 6, 7, 10, 12, 13) wenigstens der vorbestimmten Mindestanzahl entspricht, Bestimmen dass das Abbruchkriterium erfüllt ist.

10. Verfahren nach mindestens einem der vorangehenden Ansprüche, wobei nach dem Bestimmen des aktuellen Gesichtsbildes als ausgewähltes Gesichtsbild Folgendes vorgesehen ist:
- Bestimmen, ob das ausgewählte Gesichtsbild Prüfkriterien bezüglich der Eignung für ein biometrisches Passbild erfüllt;
- falls das ausgewählte Gesichtsbild die Prüfkriterien nicht erfüllt, Auswahl eines nächsten aktuellen Gesichtsbilds für die Person (16) aus der Videobildaufnahme und Ausführen der Posenprüfung für das nächste aktuelle Gesichtsbild; und
- falls das ausgewählte Gesichtsbild die Prüfkriterien erfüllt, Ausführen des Schritts des Erzeugens des Bilddatensatzes.

11. Verfahren nach mindestens einem der vorangehenden Ansprüche, wobei
- das Verfahren für Gesichtsbilder mit einer gegenüber einer Original-Bildauflösung der Videobildaufnahme verringerten Bildauflösung durchgeführt wird
- vor dem Erzeugen des Bilddatensatzes unter Verwendung des ausgewählten Gesichtsbildes wenigstens eines der Folgenden vorgesehen ist:
- Ausführen der Posenprüfung für ein dem ausgewählten Gesichtsbild entsprechendes Bild in der Original-Bildauflösung; und
- Ausführen der Schritte nach Anspruch 10 für ein dem ausgewählten Gesichtsbild entsprechendes Bild in der Original-Bildauflösung; und
- Erzeugen des Bilddatensatzes unter Verwendung des dem ausgewählten Gesichtsbild entsprechenden Bildes in der Original-Bildauflösung.

12. Verfahren zum Personalisieren eines Sicherheitsdokuments, mit:
- Bestimmen eines Bilddatensatzes für ein biometrisches Passbild gemäß einem Verfahren nach mindestens einem der vorangehenden Ansprüche;
- Bereitstellen des Bilddatensatzes in einer Personalisierungseinrichtung (19);
- Bereitstellen eines Sicherheitsdokuments (20); und
- Personalisieren des Sicherheitsdokuments (20), wobei hierbei der Bilddatensatz in der Personalisierungseinrichtung (19) verarbeitet wird und eine Repräsentation des ausgewählten Gesichtsbildes auf dem Sicherheitsdokument (20) aufgebracht wird.

13. Vorrichtung zum Bestimmen eines Bilddatensatzes für ein biometrisches Passbild, mit:
- einer Videobildaufnahmevorrichtung (14), welche eingerichtet ist, eine Folge von Gesichtsbildern für eine Person aufzunehmen; und
- einer Datenverarbeitungseinrichtung (17), welche eingerichtet ist, das Verfahren nach mindestens einem der Ansprüche 1 bis 11 auszuführen.

14. Computerprogrammprodukt umfassend Befehle, die bei der Ausführung des Programms durch eine Datenverarbeitungsvorrichtung, insbesondere eine Vorrichtung nach Anspruch 13, diese veranlassen, die Verfahrensschritte nach mindestens einem der Ansprüche 1 bis 11 auszuführen.

## Claims

1. A method for determining an image data set for a biometric passport image, comprising:
- determining a sequence of face images for a person (16) from a video image recording;
- for each of the face images:
- determining a plurality of predetermined biometric landmarks in the face image;
- dividing the face image into a plurality of sectors, wherein the dividing is carried out by means of at least one boundary line which divides the face image and which extends through a predetermined selection of the biometric landmarks;
- determining a landmark density for each of the sectors, wherein the landmark density in each case corresponds to the ratio of the number of landmarks located in the sector in question to the area of the sector;
- determining a density ratio between landmark densities which have been determined for sectors located opposite one another within the face image; and
- determining a coordinate point (3, 4, 5, 6, 7, 10, 12, 13) for the face image, wherein a coordinate value of the coordinate point (3, 4, 5, 6, 7, 10, 12, 13) corresponds to the density ratio;
- selecting a current face image from the sequence of face images;
- performing a pose check for the current face image, wherein the pose check comprises:
- determining whether the coordinate point (3, 4, 5, 6, 7, 10, 12, 13) is within a tolerance range around a reference point, wherein the reference point represents a point individual to the person (16) corresponding to a desired head orientation for a biometric passport image;
- if the coordinate point is not within the tolerance range, selecting a next current face image for the person (16) from the video image recording and performing the pose check for the next current face image; and
- if the coordinate point is within the tolerance range, determining the current face image as the selected face image; and
- generating the image data set using the selected face image.

2. The method according to claim 1, wherein
- the dividing of the face images is carried out into four sectors, wherein the four sectors are located in the face image in question at the top left, at the top right, at the bottom left and at the bottom right;
- the determining of the landmark density comprises:
- determining a left landmark density which is a landmark density of a left sector formed by a combination of the sector located at the top left and the sector located at the bottom left;
- determining a right landmark density which is a landmark density of a right sector formed by a combination of the sector located at the top right and the sector located at the bottom right;
- determining a top landmark density which is a landmark density of a top sector formed by a combination of the sector located at the top left and the sector located at the top right; and
- determining a bottom landmark density which is a landmark density of a bottom sector formed by a combination of the sector located at the bottom left and the sector located at the bottom right;
- the determining of the density ratio comprises:
- determining a left-right density ratio which is a ratio between the left landmark density and the right landmark density; and
- determining a top-bottom density ratio which is a ratio between the top landmark density and the bottom landmark density;
- the determining of the coordinate point (3, 4, 5, 6, 7, 10, 12, 13) is carried out in a two-dimensional coordinate system, wherein the coordinate value of the coordinate point (3, 4, 5, 6, 7, 10, 12, 13) in the first dimension of the two-dimensional coordinate system corresponds to the left-right density ratio and the coordinate value of the coordinate point (3, 4, 5, 6, 7, 10, 12, 13) in the second dimension of the two-dimensional coordinate system corresponds to the top-bottom density ratio; and
- the tolerance range indicates a two-dimensional area around the reference point in the two-dimensional coordinate system.

3. The method according to claim 2, wherein the dividing of the face images into a plurality of sectors is carried out by means of a first boundary line and a second boundary line, wherein the first boundary line extends through the landmarks forehead center and chin tip.

4. The method according to any one of claims 1 to 3, wherein the determining of the sequence of face images for the person (16) is carried out by means of video image recording during a head movement of the person (16).

5. The method according to claim 4, comprising generating an output to the person (16), wherein the output outputs an instruction to the person (16) to perform the head movement.

6. The method according to at least one of the preceding claims, comprising, prior to performing a pose check, determining the reference point, wherein the determining of the reference point comprises:
- determining a distance of the coordinate point (3, 4, 5, 6, 7, 10, 12, 13) to an auxiliary point, wherein the auxiliary point represents an average (10) over a population for a point corresponding to a desired head orientation for a biometric passport image;
- assigning a weight to the coordinate point (3, 4, 5, 6, 7, 10, 12, 13), wherein the weight corresponds to a mass assigned to the determined coordinate point (3, 4, 5, 6, 7, 10, 12, 13) and the smaller a distance of the coordinate point (3, 4, 5, 6, 7, 10, 12, 13) to the auxiliary point, the higher a mass is assigned to the coordinate point (3, 4, 5, 6, 7, 10, 12, 13) in question;
- adding the coordinate point (3, 4, 5, 6, 7, 10, 12, 13) with weight to a set of weighted coordinate points (3, 4, 5, 6, 7, 10, 12, 13);
- determining a center of mass of the set of weighted coordinate points (3, 4, 5, 6, 7, 10, 12, 13);
- determining the center of mass as a preliminary reference point;
- checking whether a termination criterion is fulfilled;
- if the termination criterion is not fulfilled, selecting a next current face image for the person (16) from the video image recording and repeating the aforementioned steps of determining the reference point; and
- if the termination criterion is fulfilled, determining the preliminary reference point as the reference point, selecting a next current face image for the person (16) from the video image recording and performing the pose check for the next current face image.

7. The method according to claim 6, wherein a tolerance range (9) and a plurality of auxiliary sectors are provided around the auxiliary point, and wherein the checking whether a termination criterion is fulfilled comprises:
- determining whether the coordinate point (3, 4, 5, 6, 7, 10, 12, 13) is within the tolerance range (9);
- if the check reveals that the coordinate point (3, 4, 5, 6, 7, 10, 12, 13) is within the tolerance range (9), determining that the termination criterion is not fulfilled;
- if the check reveals that the coordinate point (3, 4, 5, 6, 7, 10, 12, 13) is not within the tolerance range (11), for each of the auxiliary sectors:
- determining a number of coordinate points (3, 4, 5, 6, 7, 10, 12, 13) of the set of weighted coordinate points (3, 4, 5, 6, 7, 10, 12, 13) that is in the auxiliary sector and outside the tolerance range (9); and
- checking whether the number is less than a minimum number for the auxiliary sector in question;
- if, for at least one of the auxiliary sectors, the number is less than the minimum number, determining that the termination criterion is not fulfilled; and
- if, for none of the auxiliary sectors, the number is less than the minimum number, determining that the termination criterion is fulfilled.

8. The method according to claim 7 and claim 2, wherein at least four auxiliary sectors are provided around the auxiliary point, each comprising an angular range around the auxiliary point.

9. The method according to claim 6, wherein the checking whether a termination criterion is fulfilled comprises:
- if a number of coordinate points in the set of weighted coordinate points (3, 4, 5, 6, 7, 10, 12, 13) is less than a predetermined minimum number, determining that the termination criterion is not fulfilled; and
- if the number of coordinate points in the set of weighted coordinate points (3, 4, 5, 6, 7, 10, 12, 13) is at least the predetermined minimum number, determining that the termination criterion is fulfilled.

10. The method according to at least one of the preceding claims, wherein, after the determining of the current face image as the selected face image, there is provided:
- determining whether the selected face image fulfills test criteria regarding suitability for a biometric passport image;
- if the selected face image does not fulfill the test criteria, selecting a next current face image for the person (16) from the video image recording and performing the pose check for the next current face image; and
- if the selected face image fulfills the test criteria, performing the step of generating the image data set.

11. The method according to at least one of the preceding claims, wherein
- the method is carried out for face images with a reduced image resolution compared to an original image resolution of the video image recording
- before the generating of the image data set using the selected face image, there is provided at least one of:
- performing the pose check for an image corresponding to the selected face image at the original image resolution; and
- performing the steps of claim 10 for an image corresponding to the selected face image at the original image resolution; and
- generating the image data set using the image corresponding to the selected face image at the original image resolution.

12. A method for personalizing a security document, comprising:
- determining an image data set for a biometric passport image according to a method according to at least one of the preceding claims;
- providing the image data set in a personalization device (19);
- providing a security document (20); and
- personalizing the security document (20), wherein the image data set is processed in the personalization device (19) and a representation of the selected face image is applied to the security document (20).

13. A device for determining an image data set for a biometric passport image, comprising:
- a video image recording device (14) configured to record a sequence of face images for a person; and
- a data processing device (17) configured to carry out the method according to at least one of claims 1 to 11.

14. A computer program product comprising instructions which, when the program is executed by a data processing device, in particular a device according to claim 13, cause the data processing device to carry out the method steps according to at least one of claims 1 to 11.

## Revendications

1. Procédé de détermination d'un ensemble de données d'image pour une image de passeport biométrique, comprenant :
- la détermination d'une séquence d'images faciales pour une personne (16) à partir d'une capture d'image vidéo ;
- pour chacune des images faciales :
- la détermination d'une pluralité de repères biométriques prédéfinis dans l'image faciale ;
- la division de l'image faciale en plusieurs secteurs, la division étant effectuée au moyen d'au moins une ligne de délimitation qui divise l'image faciale et qui s'étend à travers une sélection prédéfinie des repères biométriques ;
- la détermination d'une densité de repères pour chacun des secteurs, la densité de repères correspondant respectivement au rapport entre le nombre de repères situés dans le secteur concerné et la surface du secteur ;
- la détermination d'un rapport de densité entre des densités de repères qui ont été déterminées pour des secteurs opposés à l'intérieur de l'image faciale ; et
- la détermination d'un point de coordonnées (3, 4, 5, 6, 7, 10, 12, 13) pour l'image faciale, une valeur de coordonnées du point de coordonnées (3, 4, 5, 6, 7, 10, 12, 13) correspondant au rapport de densité ;
- la sélection d'une image faciale actuelle à partir de la séquence d'images faciales ;
- la réalisation d'un contrôle de pose pour l'image faciale actuelle, le contrôle de pose comprenant :
- la détermination si le point de coordonnées (3, 4, 5, 6, 7, 10, 12, 13) se trouve dans une plage de tolérance autour d'un point de référence, le point de référence représentant un point individuel pour la personne (16) correspondant à une orientation de tête souhaitée pour une image de passeport biométrique ;
- si le point de coordonnées ne se trouve pas dans la plage de tolérance, la sélection d'une image faciale actuelle suivante pour la personne (16) à partir de la capture d'image vidéo et la réalisation du contrôle de pose pour l'image faciale actuelle suivante ; et
- si le point de coordonnées se trouve dans la plage de tolérance, la détermination de l'image faciale actuelle en tant qu'image faciale sélectionnée ; et
- la génération de l'ensemble de données d'image en utilisant l'image faciale sélectionnée.

2. Procédé selon la revendication 1, dans lequel
- la division des images faciales est effectuée en quatre secteurs, les quatre secteurs se trouvant en haut à gauche, en haut à droite, en bas à gauche et en bas à droite dans l'image faciale concernée ;
- la détermination de la densité de repères comprend :
- la détermination d'une densité de repères gauche qui est une densité de repères d'un secteur gauche formé par un agrégat du secteur situé en haut à gauche et du secteur situé en bas à gauche ;
- la détermination d'une densité de repères droite qui est une densité de repères d'un secteur droit formé par un agrégat du secteur situé en haut à droite et du secteur situé en bas à droite ;
- la détermination d'une densité de repères en haut qui est une densité de repères d'un secteur en haut formé par un agrégat du secteur situé en haut à gauche et du secteur situé en haut à droite ; et
- la détermination d'une densité de repères en bas qui est une densité de repères d'un secteur en bas formé par un agrégat du secteur situé en bas à gauche et du secteur situé en bas à droite ;
- la détermination du rapport de densité comprend :
- la détermination d'un rapport de densité gauche-droite qui est un rapport entre la densité de repères gauche et la densité de repères droite ; et
- la détermination d'un rapport de densité haut-bas qui est un rapport entre la densité de repères en haut et la densité de repères en bas ;
- la détermination du point de coordonnées (3, 4, 5, 6, 7, 10, 12, 13) est effectuée dans un système de coordonnées bidimensionnel, la valeur de coordonnées du point de coordonnées (3, 4, 5, 6, 7, 10, 12, 13) dans la première dimension du système de coordonnées bidimensionnel correspondant au rapport de densité gauche-droite et la valeur de coordonnées du point de coordonnées (3, 4, 5, 6, 7, 10, 12, 13) dans la deuxième dimension du système de coordonnées bidimensionnel correspondant au rapport de densité haut-bas ; et
- la plage de tolérance indique une zone bidimensionnelle autour du point de référence dans le système de coordonnées bidimensionnel.

3. Procédé selon la revendication 2, dans lequel la division des images faciales en plusieurs secteurs est effectuée au moyen d'une première ligne de délimitation et d'une deuxième ligne de délimitation, la première ligne de délimitation s'étendant à travers les repères centre du front et la pointe du menton.

4. Procédé selon l'une des revendications 1 à 3, dans lequel la détermination de la séquence d'images faciales pour la personne (16) est effectuée au moyen d'une capture d'image vidéo pendant un mouvement de tête de la personne (16).

5. Procédé selon la revendication 4, comprenant la génération d'une sortie pour la personne (16), la sortie délivrant une instruction à la personne (16) pour effectuer le mouvement de tête.

6. Procédé selon au moins l'une des revendications précédentes, comprenant, avant la réalisation d'un contrôle de pose, la détermination du point de référence, la détermination du point de référence comprenant :
- la détermination d'une distance du point de coordonnées (3, 4, 5, 6, 7, 10, 12, 13) à un point auxiliaire, le point auxiliaire représentant une valeur moyenne (10) sur une population pour un point correspondant à une orientation de tête souhaitée pour une image de passeport biométrique ;
- l'attribution d'une pondération au point de coordonnées (3, 4, 5, 6, 7, 10, 12, 13), la pondération correspondant à une masse attribuée au point de coordonnées déterminé (3, 4, 5, 6, 7, 10, 12, 13) et une masse étant attribuée au point de coordonnées concerné (3, 4, 5, 6, 7, 10, 12, 13) d'autant plus élevée qu'une distance du point de coordonnées (3, 4, 5, 6, 7, 10, 12, 13) au point auxiliaire est faible ;
- l'ajout du point de coordonnées (3, 4, 5, 6, 7, 10, 12, 13) avec pondération à un ensemble de points de coordonnées pondérés (3, 4, 5, 6, 7, 10, 12, 13) ;
- la détermination d'un centre de masse de l'ensemble de points de coordonnées pondérés (3, 4, 5, 6, 7, 10, 12, 13) ;
- la détermination du centre de masse en tant que point de référence provisoire ;
- le fait de vérifier si un critère d'arrêt est satisfait ;
- si le critère d'arrêt n'est pas satisfait, la sélection d'une image faciale actuelle suivante pour la personne (16) à partir de la capture d'image vidéo et la répétition des étapes susmentionnées de détermination du point de référence ; et
- si le critère d'arrêt est satisfait, la détermination du point de référence provisoire en tant que point de référence, la sélection d'une image faciale actuelle suivante pour la personne (16) à partir de la capture d'image vidéo et la réalisation du contrôle de pose pour l'image faciale actuelle suivante.

7. Procédé selon la revendication 6, dans lequel une plage de tolérance (9) et plusieurs secteurs auxiliaires sont fournis autour du point auxiliaire et dans lequel le fait de vérifier si un critère d'arrêt est satisfait comprend :
- la détermination si le point de coordonnées (3, 4, 5, 6, 7, 10, 12, 13) se trouve dans la plage de tolérance (9) ;
- si le résultat du contrôle est que le point de coordonnées (3, 4, 5, 6, 7, 10, 12, 13) se trouve dans la plage de tolérance (9), la détermination que le critère d'arrêt n'est pas satisfait ;
- si le résultat du contrôle est que le point de coordonnées (3, 4, 5, 6, 7, 10, 12, 13) ne se trouve pas dans la plage de tolérance (11), pour chacun des secteurs auxiliaires :
- la détermination d'un nombre de points de coordonnées (3, 4, 5, 6, 7, 10, 12, 13) de l'ensemble de points de coordonnées pondérés (3, 4, 5, 6, 7, 10, 12, 13) qui se trouve dans le secteur auxiliaire et en dehors de la plage de tolérance (9) ; et
- le fait de vérifier si le nombre est inférieur à un nombre minimal pour le secteur auxiliaire concerné ;
- si, pour au moins l'un des secteurs auxiliaires, le nombre est inférieur au nombre minimal, la détermination que le critère d'arrêt n'est pas satisfait ; et
- si, pour aucun des secteurs auxiliaires, le nombre n'est inférieur au nombre minimal, la détermination que le critère d'arrêt est satisfait.

8. Procédé selon la revendication 7 et la revendication 2, dans lequel au moins quatre secteurs auxiliaires sont fournis autour du point auxiliaire, chacun comprenant une plage angulaire autour du point auxiliaire.

9. Procédé selon la revendication 6, dans lequel le fait de vérifier si un critère d'arrêt est satisfait comprend :
- si un nombre de points de coordonnées dans l'ensemble de points de coordonnées pondérés (3, 4, 5, 6, 7, 10, 12, 13) est inférieur à un nombre minimal prédéterminé, la détermination que le critère d'arrêt n'est pas satisfait ; et
- si le nombre de points de coordonnées dans l'ensemble de points de coordonnées pondérés (3, 4, 5, 6, 7, 10, 12, 13) est au moins égal au nombre minimal prédéterminé, la détermination que le critère d'arrêt est satisfait.

10. Procédé selon au moins l'une des revendications précédentes, dans lequel, après la détermination de l'image faciale actuelle en tant qu'image faciale sélectionnée, il est prévu :
- de déterminer si l'image faciale sélectionnée satisfait à des critères de contrôle concernant l'aptitude à une image de passeport biométrique ;
- si l'image faciale sélectionnée ne satisfait pas aux critères de contrôle, la sélection d'une image faciale actuelle suivante pour la personne (16) à partir de la capture d'image vidéo et la réalisation du contrôle de pose pour l'image faciale actuelle suivante ; et
- si l'image faciale sélectionnée satisfait aux critères de contrôle, la réalisation de l'étape de génération de l'ensemble de données d'image.

11. Procédé selon au moins l'une des revendications précédentes, dans lequel
- le procédé est mis en œuvre pour des images faciales ayant une résolution d'image réduite par rapport à une résolution d'image originale de la capture d'image vidéo
- avant la génération de l'ensemble de données d'image en utilisant l'image faciale sélectionnée, il est prévu au moins l'une des opérations suivantes :
- la réalisation du contrôle de pose pour une image correspondant à l'image faciale sélectionnée à la résolution d'image originale ; et
- la réalisation des étapes de la revendication 10 pour une image correspondant à l'image faciale sélectionnée à la résolution d'image originale ; et
- la génération de l'ensemble de données d'image en utilisant l'image correspondant à l'image faciale sélectionnée à la résolution d'image originale.

12. Procédé de personnalisation d'un document de sécurité, comprenant :
- la détermination d'un ensemble de données d'image pour une image de passeport biométrique selon un procédé selon au moins l'une des revendications précédentes ;
- la fourniture de l'ensemble de données d'image dans un dispositif de personnalisation (19) ;
- la fourniture d'un document de sécurité (20) ; et
- la personnalisation du document de sécurité (20), l'ensemble de données d'image étant traité dans le dispositif de personnalisation (19) et une représentation de l'image faciale sélectionnée étant appliquée sur le document de sécurité (20).

13. Dispositif de détermination d'un ensemble de données d'image pour une image de passeport biométrique, comprenant :
- un dispositif de capture d'image vidéo (14) qui est conçu pour capturer une séquence d'images faciales pour une personne ; et
- un dispositif de traitement de données (17) qui est conçu pour mettre en œuvre le procédé selon au moins l'une des revendications 1 à 11.

14. Produit de programme informatique comprenant des instructions qui, lorsque le programme est exécuté par un dispositif de traitement de données, en particulier un dispositif selon la revendication 13, amènent celui-ci à mettre en œuvre les étapes de procédé selon au moins l'une des revendications 1 à 11.
